# EUROPEAN PATENT APPLICATION

(11) **EP 4 773 002 A1**
(43) Date of publication of application: **08.07.2026**
(21) Application number: 25807149.7
(22) Date of filing: 19.05.2025
(51) Int. Cl.: G06F 9/451

(54) **METHOD FOR DISPLAYING APPLICATION INTERFACE, AND ELECTRONIC DEVICE AND RELATED MEDIUM**

(30) Priority: 24.05.2024 CN 202410669541; 24.05.2024 CN 202410659776
(71) Applicant: Honor Device Co., Ltd., Shenzhen, Guangdong 518040 (CN)
(72) Inventor: WANG, Yijie, Shenzhen, Guangdong 518040 (CN)
(74) Representative: Gill Jennings & Every LLP
(86) International application number: PCT/CN2025/095768
(87) International publication number: WO 2025/242049

(57) **Abstract**

Embodiments of this application provide a method for displaying an application interface, an electronic device, and a related medium, and the method is applied to an electronic device. The electronic device includes an outer screen, and a camera is disposed on the outer screen. The method includes: displaying a first interface on the outer screen, where the first interface includes a target control of a target application; receiving a first operation instruction applied to the target control; determining a display parameter of a layer set corresponding to the first operation instruction based on configuration information of the target application; displaying a second interface on the outer screen based on the display parameter in response to the first operation instruction, where the second interface includes a first display area and a second display area, an application layer is displayed in the second display area, and a decorative layer and a background layer are displayed in the first display area. By implementing the method in this application, the decorative layer may be selectively presented to a user with reference to different operation scenarios and configuration information of different applications. In addition to improving adaptation of the decorative layer to the different applications, various application interfaces presented to the user are more uniform and aesthetic.

## Description

This application claims priority to Chinese Patent Application No. 202410669541.7, filed with the China National Intellectual Property Administration on May 24, 2024 and entitled "METHOD FOR DISPLAYING APPLICATION INTERFACE, ELECTRONIC DEVICE, AND RELATED MEDIUM", and Chinese Patent Application No. 202410659776.8, entitled "METHOD FOR DISPLAYING INTERFACE BASED ON OPERATION GESTURE, ELECTRONIC DEVICE, AND RELATED MEDIUM", which are incorporated herein by reference in their entireties.

### TECHNICAL FIELD

This application relates to the computer field, and in particular, to a method for displaying an application interface, an electronic device, and a related medium.

### BACKGROUND

With continuous development of flexible screens, increasingly more foldable-typed electronic devices with a plurality of screens appear on the market. The foldable-typed electronic device is easier to carry than a non-foldable-typed electronic device. In addition, the foldable-typed electronic device with a plurality of screens can provide more interesting and diversified operation experience for a user. Currently, in a conventional technology, display content such as time, a date, a weather, or a message reminder may be presented to the user on an outer screen (that is, a screen that runs when the electronic device is in a folded state). For an electronic device with a relatively large outer screen, the user may be further allowed to operate some functions of some applications on the outer screen. Because a camera and another hole area exist in an area in which the outer screen of the foldable-typed electronic device is located, when the user uses an application through the outer screen, a case in which an application interface is blocked easily exists, and there is another phenomenon that an interface is not aesthetic due to mismatch between a size of the application interface and a size of the outer screen, bringing poor user experience to the user. In this case, how to improve harmony and aesthetics of the application interface displayed on the outer screen is a problem that a person skilled in the art urgently needs to resolve.

### SUMMARY

According to a first aspect, this application provides a method for displaying an application interface. The method is applied to a electronic device, the electronic device includes an outer screen, a camera is disposed on the outer screen, and the outer screen is a screen that interacts with a user when the electronic device is in a folded state. The method may include:
displaying a first interface on the outer screen, where the first interface may include a target control of a target application;
receiving a first operation instruction applied to the target control;
determining a display parameter of a layer set corresponding to the first operation instruction based on configuration information of the target application, where the layer set may include a background layer, an application layer, and a decorative layer, and the application layer includes display content corresponding to the first operation instruction; and
displaying a second interface on the outer screen based on the display parameter in response to the first operation instruction, where the second interface may include a first display area and a second display area, the camera is located in the first display area and outside the second display area, the application layer is displayed in the second display area, and the decorative layer and the background layer are displayed in the first display area.

By implementing the method provided in the first aspect, when receiving the first operation instruction of the user for the target control corresponding to the target application, the electronic device can determine a display interface (for example, the second interface) corresponding to the first operation instruction. Further, the electronic device may determine, based on the first operation instruction, parameter information of various layers (for example, the background layer, the application layer, and the decorative layer) corresponding to the second interface, to generate the second interface, achieving a purpose of selectively presenting the decorative layer based on a requirement of the user (or a requirement of the target application). This helps to ensure that the user normally uses a function of the target application, and further enable each application to have a similar application interface layout (for example, presenting the decorative layer in the first display area), thereby improving aesthetics of each application interface layout. Currently, a camera and another hole area usually exist in an area in which an outer screen of a foldable-typed electronic device is located, when the user uses an application through the outer screen, a case in which an application interface is blocked easily exists, and there is another phenomenon that an interface is not aesthetic due to mismatch between a size of the application interface and a size of the outer screen, bringing poor user experience to the user. A difference is that, according to the method in an embodiment of this application, a display parameter of the decorative layer may be properly adjusted based on the first operation instruction of the user and the configuration information of the target application, and the second interface is generated based on the decorative layer, the background layer, and the application layer. In a case in which display content corresponding to the application interface is possibly blocked, this helps to achieve, by presenting the decorative layer and the background layer in the first display area and presenting the application layer in the second display area, a purpose of normally using a function of the target application by the user, and improves aesthetics of the application interface presented to the user, thereby further improving user experience.

By implementing the method provided in the first aspect, in some embodiments, the configuration information of the target application may include display parameters corresponding to a plurality of application interfaces of the target application.

The determining a display parameter of a layer set corresponding to the first operation instruction based on configuration information of the target application may include:
determining a target interface based on the first operation instruction, where the target interface is an interface of the target application in response to the first operation instruction; and
determining a display parameter corresponding to the target interface from the display parameters corresponding to the plurality of application interfaces.

By implementing the method provided in the foregoing embodiment, the target application may be corresponding to a plurality of different application interfaces, and each application interface has corresponding display parameters set for the background layer, the application layer, and the decorative layer. Specifically, the electronic device may determine a corresponding target interface based on the first operation instruction (it may be understood that the target interface is an interface of the target application in response to the first operation instruction), and may determine the display parameter corresponding to the target interface from the display parameters corresponding to the plurality of application interfaces, thereby avoiding occurrence of a case in which display content corresponding to the target interface is blocked by the hole area. This helps to ensure that the user can normally use a function of the target application.

By implementing the method provided in the first aspect, in some embodiments, the display parameters corresponding to the plurality of application interfaces may include sizes, display levels, and display content of a background layer and an application layer in a corresponding application interface, and display transparency of a decorative layer.

By implementing the method provided in the foregoing embodiment, the target application may preset layer sizes and display levels of background layers and application layers that are corresponding to different application interfaces and that are to be displayed on the outer screen. Further, the target application may preset display transparency of decorative layers corresponding to the different application interfaces. This helps to present different decorative effects under different first operation instructions (or in different application interfaces). For example, if display content corresponding to a first application interface of the target application is not blocked by the hole area in a case of full-screen (which may be understood as the entire outer screen) display, the display transparency of the decorative layer may be set to 100% (which may be understood as hiding the decorative layer). This helps to provide a wider application operation space or area for the user. If display content corresponding to a second application interface of the target application is blocked by the hole area in a case of full-screen (which may be understood as the entire outer screen) display, the size of the application layer may be set to a size of the second display area, the application layer is presented in the second display area, and the display transparency of the decorative layer is set to 0% (which may be understood as displaying the decorative layer). This helps to ensure that the user can normally use a function of the target application, and can further improve aesthetics of the application interface presented to the user.

By implementing the method provided in the first aspect, in some embodiments, a display level of the decorative layer is higher than the display levels of the background layer and the application layer; and
if the display level of the application layer is the same as the display level of the background layer, the size of the background layer is the same as a size of the first display area; or
if the display level of the application layer is higher than the display level of the background layer, the size of the background layer is greater than or equal to a size of the first display area.

By implementing the method provided in the foregoing embodiment, the display level of the decorative layer can be set higher than the display levels of the background layer and the application layer. This helps to subsequently achieve a purpose of displaying or hiding the decorative layer by adjusting only the transparency of the decorative layer. This is simpler and faster than adjusting the display level of the decorative layer based on the configuration information of the target application. Further, for a display level relationship between the background layer and the application layer, the size of the background layer may be adaptively adjusted. This helps simplify complexity of setting a display parameter related to the background layer without affecting normal and complete display of the application interface.

By implementing the method provided in the first aspect, in some embodiments, before the displaying a second interface on the outer screen, the method may further include:
displaying a transition interface on the outer screen, where the transition interface may include the background layer, the application layer, and the decorative layer whose transparency is target transparency, and the target transparency is determined based on a playback area of an animation effect corresponding to the first operation instruction.

By implementing the method provided in the foregoing embodiment, to display a smoother and more aesthetic switching effect of application interfaces for the user, the electronic device can display the transition interface on the outer screen in a process of executing the animation effect corresponding to the first operation instruction, and present the second interface (namely, an application interface corresponding to the first operation instruction) on the outer screen when execution of the animation effect finishes. The transition interface includes the background layer, the application layer, and the decorative layer whose transparency is the target transparency, and the target transparency may be determined based on the playback area of the animation effect corresponding to the first operation instruction. It may be learned that the method in this embodiment of this application can adjust, for different first operation instructions, the decorative layer to different transparency in the process of executing the animation effect corresponding to the first operation instruction. For example, in response to the user tapping an icon of the target application on a home screen (which may be understood as starting the target application), in an execution process of displaying the animation effect for opening the target application, the electronic device may adjust the transparency of the decorative layer to 100% (which may be understood as not displaying/hiding the decorative layer), and display the decorative layer when starting of the target application is complete (which may be understood as starting to display a home page interface corresponding to the target application on the outer screen), so that an application launch animation has more senses of layering and aesthetics.

By implementing the method provided in the first aspect, in some embodiments, the method may further include:
if the playback area of the animation effect corresponding to the first operation instruction is the second display area, determining the target transparency as first transparency, where the first transparency is transparency corresponding to the decorative layer in the first interface; or
if the playback area of the animation effect corresponding to the first operation instruction is the entire outer screen, determining the target transparency as second transparency, where the second transparency is corresponding transparency when the decorative layer is hidden.

By implementing the method provided in the foregoing embodiment, the electronic device can determine the target transparency as the first transparency in a case in which the playback area of the animation effect corresponding to the first operation instruction is the second display area. This helps to maintain consistency of application interface display, thereby achieving a purpose of displaying a more aesthetic application interface for the user. The first transparency is the transparency corresponding to the decorative layer in the first interface. The electronic device can further determine the target transparency as the second transparency in a case in which the playback area of the animation effect corresponding to the first operation instruction is the entire outer screen. This helps to display a smoother interface change animation effect with more senses of layering for the user, thereby achieving a purpose of displaying a more aesthetic application interface for the user. The second transparency is the corresponding transparency when the decorative layer is hidden.

By implementing the method provided in the first aspect, in some embodiments, the method may further include:
receiving a power-on instruction for the electronic device; and
generating the decorative layer based on preset information in response to the power-on instruction, where the preset information may include a size of the decorative layer, display content corresponding to the decorative layer, and initial transparency of the decorative layer, and the initial transparency is the second transparency.

By implementing the method provided in the foregoing embodiment, the electronic device can generate the decorative layer based on the preset information in a power-on process, and set the transparency of the decorative layer to the second transparency (which may be understood as hiding the decorative layer). The size of the decorative layer, the display content corresponding to the decorative layer, and the initial transparency of the decorative layer are included. It may be learned that the decorative layer is related to the preset information in the electronic device and is not related to another application in the electronic device, so that a same decorative layer can be presented for different application interfaces, thereby ensuring similarity and harmony of presenting application interfaces on the outer screen by the electronic device, and achieving a purpose of displaying a more aesthetic application interface for the user.

By implementing the method provided in the first aspect, in some embodiments, the displaying a second interface on the outer screen based on the display parameter in response to the first operation instruction may include:
generating the background layer and the application layer based on the display parameter in response to the first operation instruction;
adjusting the initial transparency of the decorative layer to the display transparency based on the display parameter;
generating the second interface based on the background layer, the application layer, and the decorative layer; and
displaying the second interface on the outer screen.

By implementing the method provided in the foregoing embodiment, after receiving the first operation instruction of the user for the target application, the electronic device can generate a corresponding background layer and a corresponding application layer based on the display parameter corresponding to the first operation instruction, or can adjust the transparency of the decorative layer from the initial transparency to the display transparency based on the display parameter corresponding to the first operation instruction. It may be learned that various display parameters of the background layer and the application layer are related to the configuration information of the target application. However, the configuration information of the target application affects only the transparency of the decorative layer, and does not affect the size, the display level, and the display content of the decorative layer. This helps to present a same decorative layer for different application interfaces, thereby ensuring similarity and harmony of presenting application interfaces on the outer screen by the electronic device, and achieving a purpose of displaying a more aesthetic application interface for the user.

By implementing the method provided in the first aspect, in some embodiments, the method may further include:
obtaining an information description file corresponding to the target application when downloading of the target application is complete in the electronic device, or when the target application runs to a target node; and
determining the configuration information of the target application based on the information description file.

By implementing the method provided in the foregoing embodiment, the electronic device can obtain the information description file corresponding to the target application when downloading of the target application is complete or when the target application runs to the target node, to determine the configuration information corresponding to the target application. It may be understood that the electronic device can obtain configuration information of the target application that is statically configured, to achieve a purpose of determining a subsequent display status (display or hide) of the decorative layer in the second interface. The electronic device can further obtain configuration information of the target application that is dynamically configured, to achieve a purpose of determining a subsequent display status (display or hide) of the decorative layer in the second interface.

By implementing the method provided in the first aspect, in some embodiments, the outer screen includes a first operation area, the method may further include:
displaying the first application interface of the target application on the outer screen, where the first application interface is one of the plurality of application interfaces corresponding to the target application, and the first application interface is corresponding to a first layer set;
receiving a second operation instruction applied to the first application interface;
generating a target layer when a start point of a motion track of the second operation instruction is in the first operation area, where the target layer is a display layer corresponding to a home screen of the outer screen, and a display level of the target layer is lower than a display level of each layer in the first layer set; and
displaying the home screen on the outer screen based on the target layer if the motion track meets a preset condition; or
if the motion track does not meet the preset condition, clearing the target layer, and displaying a second application interface corresponding to the second operation instruction on the outer screen.

By implementing the method provided in the foregoing embodiment, the electronic device can determine a foreground application of the electronic device based on the start point of the motion track corresponding to the operation instruction of the user. Specifically, the first operation area exists on the outer screen of the electronic device. When the electronic device receives the second operation instruction applied to the first application interface of the target application, if the start point of the motion track corresponding to the second operation instruction is in the first operation area, the target layer may be generated, and the display level of the target layer is set to be lower than the display level of each layer in the first layer set, so that the target layer is not perceived by the user. Further, if the motion track corresponding to the second operation instruction meets the preset condition, it may be considered that an intention of the second operation instruction of the user is to return to the home screen of the outer screen, so that the home screen can be displayed on the outer screen based on the target layer. If the motion track corresponding to the second operation instruction does not meet the preset condition, it may be considered that the intention of the second operation instruction of the user is to use a related function of the target application, so that the target layer can be cleared, and the second application interface corresponding to the operation instruction can be displayed on the outer screen. Currently, a foldable-typed electronic device does not have a step for determining an operation gesture. When a function control of a third-party application is located in the first operation area, the electronic device easily mistakenly identifies a real operation intention of the user. For example, if the user wants to use a timing function of a Clock application (it is assumed that a first button corresponding to the timing function is located in the first operation area), when the user taps the first button, the electronic device possibly recognizes that "the user wants to return to the home screen", and directly displays the home screen on the outer screen. Consequently, the user cannot normally use the timing function of the Clock application. A difference is that, according to the method in this embodiment of this application, the real operation intention of the user can be confirmed based on the motion track of the operation instruction. For example, if the user wants to use the timing function of the Clock application (it is assumed that the first button corresponding to the timing function is located in the first operation area), when the user taps the first button, the electronic device determines the home screen of the outer screen as a foreground application, and generates a target layer corresponding to the foregoing home screen. However, the electronic device does not directly present the target layer (which may be understood as the home screen of the outer screen) to the user, and sets a display level of the target layer to be lower than the display level of each layer corresponding to the first application interface. Further, because the user only taps the first button (it may be considered that the motion track corresponding to the operation instruction is a point), and the motion track corresponding to the operation instruction does not meet the preset condition (it is assumed that the preset condition is that a touch point corresponding to a motion track slides upward from the first operation area to a center location of the outer screen), an operation intention of the user may be considered as "using the timing function", so that an application interface corresponding to the timing function can be presented to the user on the outer screen. Therefore, accuracy of identifying the operation intention is improved, and user experience is effectively improved.

By implementing the method provided in the first aspect, in some embodiments, the outer screen further includes a second operation area, the first operation area is located at a bottom of the outer screen, and the second operation area is located at a top of the outer screen; and
the preset condition is that a touch point corresponding to a motion track slides upward from the first operation area to a center location of the second operation area.

By implementing the method provided in the foregoing embodiment, the electronic device can determine the real operation intention of the user based on the motion track corresponding to the operation instruction, effectively avoiding a case in which a function operation manner corresponding to the third-party application conflicts with a function operation manner corresponding to an electronic device system, and improving user experience.

By implementing the method provided in the first aspect, in some embodiments, the method may further include:
if the motion track meets the preset condition, displaying the home screen on the outer screen based on the decorative layer and the target layer, where transparency of the decorative layer is the second transparency, the second transparency is the corresponding transparency when the decorative layer is hidden, and a size of the target layer is the same as a size of the outer screen.

By implementing the method provided in the foregoing embodiment, the electronic device can hide the decorative layer while presenting the foregoing home screen to the user, thereby avoiding a case in which home screen content is blocked. It should be noted that in a case in which display content corresponding to the application interface is possibly blocked, the electronic device can adjust the transparency of the decorative layer and the size of the application layer, to achieve a purpose of normally using a function of the target application by the user, and improve aesthetics of a target window.

By implementing the method provided in the first aspect, in some embodiments, the second application interface is corresponding to a second layer set, the second layer set includes the decorative layer, the background layer, and a second application layer, and the second application layer is configured to display display content corresponding to the operation instruction.

The method may further include:
if the motion track does not meet the preset condition, clearing the target layer, and determining a display parameter of the second layer set based on the configuration information of the target application, where the display parameter of the second layer set includes sizes, display levels, and display content of the background layer and the second application layer, and display transparency of the decorative layer;
generating the background layer and the second application layer based on the display parameter of the second layer set in response to the second operation instruction;
adjusting the transparency of the decorative layer to corresponding display transparency based on the display parameter of the second layer set;
generating the second application interface based on the background layer, the second application layer, and the decorative layer; and
displaying the second application interface on the outer screen.

By implementing the method provided in the foregoing embodiment, if the motion track does not meet the preset condition, it may be considered that an operation intention of the user is to use a function of the target application. In this case, a corresponding background layer and a corresponding second application layer can be generated based on a display parameter corresponding to the operation instruction, and the transparency of the decorative layer can be adjusted to the display transparency based on the display parameter corresponding to the operation instruction. It may be learned that various display parameters of the background layer and the application layer are related to the configuration information of the target application. However, the configuration information of the target application affects only the transparency of the decorative layer, and does not affect the size, the display level, and the display content of the decorative layer. This helps to present a same decorative layer for different application interfaces, thereby ensuring similarity and harmony of presenting application interfaces on the outer screen by the electronic device, and achieving a purpose of displaying a more aesthetic application interface for the user.

According to a second aspect, an embodiment of this application provides an electronic device, the electronic device includes an outer screen and a processing module, and a camera is disposed on the outer screen.

The outer screen may be configured to display a first interface, and the first interface may include a target control of a target application.

The outer screen may be further configured to receive a first operation instruction applied to the target control.

The processing module may be configured to determine a display parameter of a layer set corresponding to the first operation instruction based on configuration information of the target application, where the layer set may include a background layer, an application layer, and a decorative layer, and the application layer includes display content corresponding to the first operation instruction.

The processing module may be further configured to display a second interface on the outer screen based on the display parameter in response to the first operation instruction, where the second interface may include a first display area and a second display area, the camera is located in the first display area and outside the second display area, the application layer is displayed in the second display area, and the decorative layer and the background layer are displayed in the first display area.

By implementing the method provided in the second aspect, in some embodiments, the configuration information of the target application may include display parameters corresponding to a plurality of application interfaces of the target application.

The electronic device may further include:
The processing module may be further configured to determine a target interface based on the first operation instruction, where the target interface is an interface of the target application in response to the first operation instruction; and
determine a display parameter corresponding to the target interface from the display parameters corresponding to the plurality of application interfaces.

By implementing the method provided in the second aspect, in some embodiments, the display parameters corresponding to the plurality of application interfaces may include sizes, display levels, and display content of a background layer and an application layer in a corresponding application interface, and display transparency of a decorative layer.

By implementing the method provided in the second aspect, in some embodiments, a display level of the decorative layer is higher than the display levels of the background layer and the application layer; and
if the display level of the application layer is the same as the display level of the background layer, the size of the background layer is the same as a size of the first display area; or
if the display level of the application layer is higher than the display level of the background layer, the size of the background layer is greater than or equal to a size of the first display area.

By implementing the method provided in the second aspect, in some embodiments, the electronic device may further include:
The outer screen may be further configured to display a transition interface, where the transition interface may include the background layer, the application layer, and the decorative layer whose transparency is target transparency, and the target transparency is determined based on a playback area of an animation effect corresponding to the first operation instruction.

By implementing the method provided in the second aspect, in some embodiments, the electronic device may further include:
The processing module may be further configured to: if the playback area of the animation effect corresponding to the first operation instruction is the second display area, determine the target transparency as first transparency, where the first transparency is transparency corresponding to the decorative layer in the first interface.

The processing module may be further configured to: if the playback area of the animation effect corresponding to the first operation instruction is the entire outer screen, determine the target transparency as second transparency, where the second transparency is corresponding transparency when the decorative layer is hidden.

By implementing the method provided in the second aspect, in some embodiments, the electronic device may further include an interaction module.

The interaction module may be configured to receive a power-on instruction for the electronic device.

The processing module may be further configured to generate the decorative layer based on preset information in response to the power-on instruction, where the preset information may include a size of the decorative layer, display content corresponding to the decorative layer, and initial transparency of the decorative layer, and the initial transparency is the second transparency.

By implementing the method provided in the second aspect, in some embodiments, the electronic device may further include:
The processing module may be further configured to generate the background layer and the application layer based on the display parameter in response to the first operation instruction.

The processing module may be further configured to adjust the initial transparency of the decorative layer to the display transparency based on the display parameter.

The processing module may be further configured to generate the second interface based on the background layer, the application layer, and the decorative layer.

By implementing the method provided in the second aspect, in some embodiments, the electronic device may further include:
The processing module may be further configured to obtain an information description file corresponding to the target application when downloading of the target application is complete in the electronic device, or when the target application runs to a target node.

The processing module may be further configured to determine the configuration information of the target application based on the information description file.

By implementing the method provided in the second aspect, in some embodiments, the outer screen includes a first operation area, the electronic device may further include:
The outer screen may be further configured to display a first application interface of the target application, where the first application interface is one of the plurality of application interfaces corresponding to the target application, and the first application interface is corresponding to a first layer set.

The outer screen may be further configured to receive a second operation instruction applied to the first application interface.

The processing module may be further configured to generate a target layer when a start point of a motion track of the second operation instruction is in the first operation area, where the target layer is a display layer corresponding to a home screen of the outer screen, and a display level of the target layer is lower than a display level of each layer in the first layer set.

The outer screen may be further configured to display the home screen on the outer screen based on the target layer in a case in which the motion track meets a preset condition.

The processing module may be further configured to clear the target layer in a case in which the motion track does not meet the preset condition.

The outer screen may be further configured to display a second application interface corresponding to the second operation instruction in a case in which the motion track does not meet the preset condition.

By implementing the method provided in the second aspect, in some embodiments, the outer screen further includes a second operation area, the first operation area is located at a bottom of the outer screen, and the second operation area is located at a top of the outer screen; and
the preset condition is that a touch point corresponding to a motion track slides upward from the first operation area to a center location of the second operation area.

By implementing the method provided in the second aspect, in some embodiments, the electronic device may further include:
The processing module may be further configured to: in a case in which the motion track meets the preset condition, display the home screen on the outer screen based on the decorative layer and the target layer, where transparency of the decorative layer is the second transparency, the second transparency is the corresponding transparency when the decorative layer is hidden, and a size of the target layer is the same as a size of the outer screen.

By implementing the method provided in the second aspect, in some embodiments, the second application interface is corresponding to a second layer set, the second layer set may include the decorative layer, the background layer, and a second application layer, and the second application layer is configured to display display content corresponding to the operation instruction.

The electronic device may further include:
The processing module may be further configured to: in a case in which the motion track does not meet the preset condition, clear the target layer, and determine a display parameter of the second layer set based on the configuration information of the target application.

The processing module may be further configured to generate the background layer and the second application layer based on the display parameter of the second layer set in response to the second operation instruction.

The processing module may be further configured to adjust the transparency of the decorative layer to corresponding display transparency based on the display parameter of the second layer set.

The processing module may be further configured to generate the second application interface based on the background layer, the second application layer, and the decorative layer.

The outer screen may be further configured to display the second application interface.

According to a third aspect, an embodiment of this application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the method according to any one of the first aspect and the possible implementations of the first aspect is performed.

According to a fourth aspect, an embodiment of this application provides a chip, including a logic circuit and an interface. The logic circuit is coupled to the interface. The interface is configured to input and/or output a code instruction, and the logic circuit is configured to execute the code instruction, so that the method according to any one of the first aspect or the possible implementations of the first aspect is performed.

According to a fifth aspect, this application provides a computer-readable storage medium, including instructions. When the instructions are run on a target terminal, the method according to any one of the first aspect and the possible implementations of the first aspect is performed.

According to a sixth aspect, this application provides a computer program product including instructions. When the computer program product runs on an electronic device, the electronic device is enabled to perform the method according to any one of the first aspect and the possible implementations of the first aspect.

It may be understood that, the electronic device provided in the second aspect and the third aspect, the chip provided in the fourth aspect, the computer-readable storage medium provided in the fifth aspect, and the computer program product provided in the sixth aspect are all related to the color adaptation-based image processing method provided in the first aspect, and can be used to perform the method provided in this application. Therefore, for beneficial effects that can be achieved by the electronic device, the chip, the computer-readable storage medium, and the computer program product, reference may be made to the beneficial effects of the color adaptation-based image processing method in the first aspect. Details are not described herein again.

### BRIEF DESCRIPTION OF DRAWINGS

To describe technical solutions in embodiments of this application more clearly, the following briefly describes accompanying drawings that need to be used in embodiments. It is clear that the accompanying drawings in the following descriptions show merely some embodiments of this application, and a person of ordinary skill in the art may still derive other accompanying drawings from these accompanying drawings without creative efforts.
FIG. 1 is a schematic diagram of a scenario displayed on an outer screen of a foldable-screen mobile phone according to a conventional technology;
FIG. 2 is a schematic flowchart of a method for displaying an application interface according to an embodiment of this application;
FIG. 3 is a schematic diagram of a structure of an electronic device according to an embodiment of this application;
FIG. 4 is a schematic diagram of a display level relationship between a background layer and an application layer according to an embodiment of this application;
FIG. 5 is a schematic flowchart of generating a decorative layer according to an embodiment of this application;
FIG. 6A-FIG. 6C are schematic diagrams of scenarios for displaying animation effects corresponding to a first operation instruction according to an embodiment of this application;
FIG. 7 is a schematic flowchart of a procedure of executing an animation effect according to an embodiment of this application;
FIG. 8 is a schematic flowchart of displaying a decorative interface corresponding to interface rotation according to an embodiment of this application;
FIG. 9 is a schematic flowchart of another method for displaying an application interface according to an embodiment of this application;
FIG. 10 is a schematic diagram of a scenario of an operation on an outer screen of a foldable-screen mobile phone according to a conventional technology;
FIG. 11 is a schematic flowchart of a method for displaying an interface based on an operation gesture according to an embodiment of this application;
FIG. 12 is a schematic diagram of a structure of another electronic device according to an embodiment of this application;
FIG. 13A to FIG. 13C are a schematic diagram of a scenario for determining a preset condition according to an embodiment of this application;
FIG. 14A(1) to FIG. 14A(3)-FIG. 14C(1) to FIG. 14C(4) are schematic diagrams of scenarios of interface display according to an embodiment of this application;
FIG. 15A to FIG. 15D are a schematic diagram of a scenario of another interface display according to an embodiment of this application;
FIG. 16 is a schematic flowchart of another method for displaying an interface based on an operation gesture according to an embodiment of this application;
FIG. 17 is a schematic flowchart of still another method for displaying an interface based on an operation gesture according to an embodiment of this application;
FIG. 18 is a schematic diagram of composition of an electronic device according to an embodiment of this application;
FIG. 19 is a schematic diagram of a hardware structure of an electronic device according to an embodiment of this application;
FIG. 20 is a block diagram of a software structure according to an embodiment of this application; and
FIG. 21 is a block diagram of another software structure according to an embodiment of this application.

### DESCRIPTION OF EMBODIMENTS

The following clearly and completely describes the technical solutions in embodiments of this application with reference to the accompanying drawings. Terms used in the following embodiments of this application are merely intended to describe specific embodiments, but not intended to limit this application. As used in this specification and the appended claims of this application, singular expressions "one", "a", "the", "foregoing", and "this" are intended to include plural expressions, unless otherwise clearly specified in the context. It should be further understood that, in descriptions of the embodiments of this application, unless otherwise stated, "/" indicates a meaning of "or", for example, A/B may indicate A or B. "And/or" in the specification is merely used to describe an association relationship between associated objects, and indicates that three relationships may exist. For example, "A and/or B" may indicate that there are three cases: Only A exists, both A and B exist, and only B exists. In addition, in the descriptions of the embodiments of this application, "a plurality of' means two or more.

The following terms "first" and "second" are merely intended for descriptive purposes, and shall not be understood as an implication or implication of relative importance or an implicit indication of a quantity of indicated technical features. Therefore, features defined with "first" and "second" may explicitly or implicitly include one or more features. In the descriptions of the embodiments of this application, unless otherwise stated, "a plurality of' means two or more.

The term "user interface (user interface, UI)" in the following embodiments of this application is a medium interface for interaction and information exchange between an application program or an operating system and a user, and implements conversion between an internal form of information and a form that can be accepted by the user. The user interface is source code written in a specific computer language such as java or an extensible markup language (extensible markup language, XML). Interface source code is parsed and rendered on an electronic device, and is finally presented as content that can be identified by the user. The user interface is usually in a representation form of a graphical user interface (graphic user interface, GUI), and the graphical user interface is a user interface that is related to a computer operation and that is displayed in a graphical manner. The user interface may be a visual interface element such as a text, an icon, a button, a menu, a tab, a text box, a dialog box, a status bar, a navigation bar, or a Widget displayed on a display screen of the electronic device.

For clarity and brevity of the following embodiments, a brief description of a related technology is first provided.

### (1) Foldable-screen mobile phone and flexible screen

The foldable-screen mobile phone is a mobile phone that can be folded inward or outward. A screen of the foldable-screen mobile phone can switch between two statuses: a smaller size and a larger size in an unfolded state. Currently, an available foldable mobile phone product may be designed in a horizontal folding mode similar to that of a book, or may be in a vertical folding mode. It should be noted that a main board and a battery cannot be folded. Actually, only a screen is foldable, and the main board and the battery are distributed in a body on two sides.

Furthermore, because an organic electroluminescence display (Organic Electroluminescence Display, OLED) panel has no backlight module, can self-emit light through a screen, and can be bent at an angle. In this case, at present, a plurality of foldable mobile phones choose to combine a foldable mechanism on the body with an OLED screen to implement a foldable effect.

### (2) Focus window

The focus window is a window in which an electronic device is currently interacting with a user. The window is responsible for receiving a keyboard event and a touch event. When a new Activity is started, a new window is added, an old window is removed, and switching of a split-screen mode is performed, the focus window may be updated. An Activity is one of four basic components in Android components, and represents a screen or an interface in an application program. Specifically, the Activity is responsible for displaying a user interface, processing an event input by the user, and promoting a status change of an application program. Each Activity may be started independently, and may include various user interface elements, for example, a button and text input, and communicate via the Internet. The Activity has four statuses: running, paused, stopped, and destroyed. A developer may manage a lifecycle of the Activity to implement a complex application program and provide rich user experience.

### (3) Animation effect

The animation effect, also referred to as animation effect design or motion design, refers to effects of all motions on a user interface (User Interface, UI). Animation effects may be roughly classified into two types: a functional animation effect and a display animation effect. The functional animation effect is mainly used in product design, and transfers information to a user through motion graphics, for example, load/refresh and a progress bar. The display animation effect is more similar to some animation effects designed to serve brand recognition or to increase product interest in a specific scenario. The animation effects usually do not serve product interaction, and are usually for separate scenarios and cannot be reused.

Functions of the animation effect are as follows:
increasing product approachability and interest, thereby closing a distance with a viewer;
facilitating displaying design details, thereby reducing communication costs; and
better displaying a function of a mobile product, thereby enabling the user to more intuitively understand details such as a core feature, a use, and a usage method of a product.

A UI animation effect is more effective for brand building, and can better transfer a brand idea and express a brand feature. Implementations of the animation effect may be very diverse, including a key frame animation, an interaction special effect, a micro-animation effect, and the like. The key frame animation refers to changing an attribute of an element from A to B (two key frames), for example, moving from left to right, changing from blue to green, and changing from large to small. However, the interaction special effect and the micro-animation effect are not limited to feedbacks meeting interaction, and are different from a general key frame animation in terms of animation creation and implementations.

### (4) Package management service

The package manager service (Package Manager Service, PMS) is a software management service, and is a core service in an Android system. The package manager service is responsible for managing and maintaining all installed Android application packages (Android application package, APK) in the system. By using the PMS, a user can conveniently obtain, install, update, and uninstall an application package, thereby improving user experience for an application program and working efficiency.

### (5) Foreground application and background application

"Foreground" and "background" are usually used to describe statuses of an application program during running. Specifically, the "foreground application" means that the application program is being opened or operated by a user or is currently in a displayed state. The "background application" means that the application program is still running, but the user no longer directly operates or pays attention to the application. The application is not displayed on a screen, and becomes in a state of running in a background. Application programs running in a background may perform some lightweight operations, for example, receiving a message notification and monitoring a network change, but resource usage and priorities of the application programs are relatively low. It should be noted that too many background application programs occupy resources and power of a system, which affects device performance and battery life performance. Therefore, it is recommended to close or quit the background application programs in a timely manner.

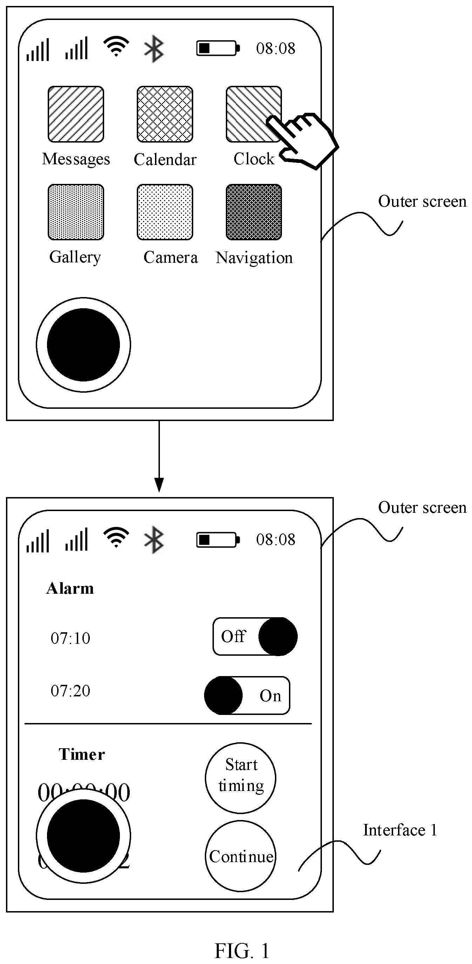

Referring to FIG. 1, FIG. 1 is a schematic diagram of a scenario displayed on an outer screen of a foldable-screen mobile phone according to a conventional technology.

As shown in FIG. 1, the foldable-screen mobile phone has an inner screen and an outer screen. In a case of a folded state, a user may interact with the foldable-screen mobile phone through the outer screen. For example, in response to tapping an icon corresponding to a "clock" application on an outer screen interface by the user, the foldable-screen mobile phone may present an operation interface (for example, an interface 1 in FIG. 1) corresponding to the application to the user.

It may be learned that, because a hole area corresponding to a camera exists on the outer screen of the foldable-screen mobile phone, some display content of an operation interface is blocked. In this case, the user cannot completely see display content corresponding to the application interface, and the user cannot normally use various functions corresponding to the "clock" application.

A difference is that, according to a method in an embodiment of this application, a display parameter of a decorative layer may be properly adjusted based on a first operation instruction of the user and configuration information of a target application, and a second interface is generated based on the decorative layer, a background layer, and an application layer. In a case in which the display content corresponding to the application interface is possibly blocked, this helps to achieve, by presenting the decorative layer and the background layer in a first display area and presenting the application layer in a second display area, a purpose of normally using a function of the target application by the user, and improves aesthetics of the application interface presented to the user, thereby further improving user experience.

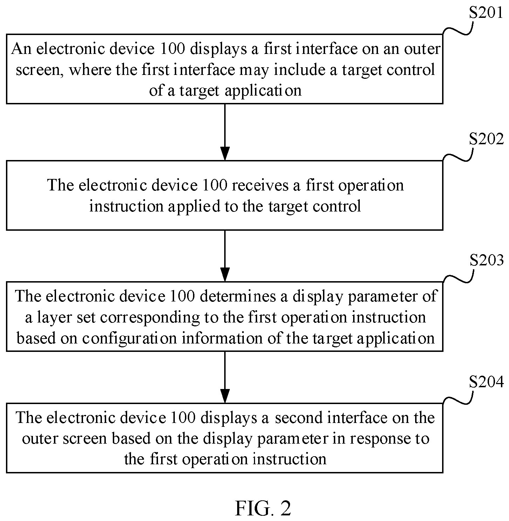

Referring to FIG. 2, FIG. 2 is a schematic flowchart of a method for displaying an application interface according to an embodiment of this application.

As shown in FIG. 2, the method may include:
S201. An electronic device 100 displays a first interface on an outer screen, where the first interface may include a target control of a target application.

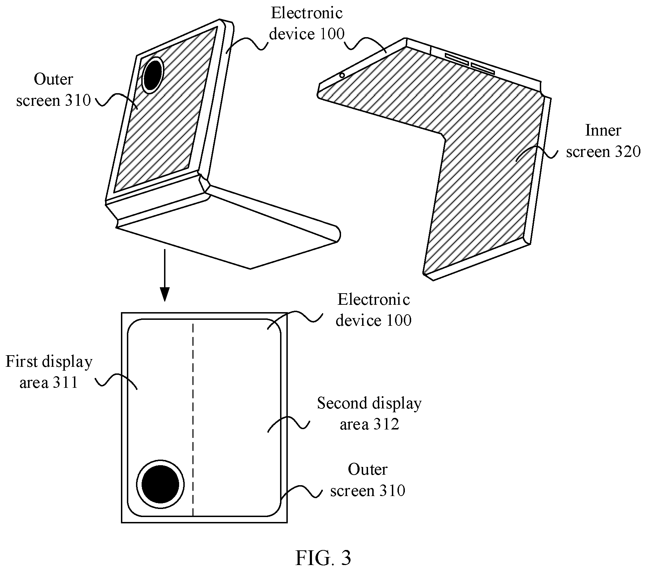

It should be noted that this embodiment of this application may be applied to the electronic device 100. Further, the method in this embodiment of this application mainly describes an interface display method of the outer screen of the electronic device 100. For example, referring to FIG. 3, FIG. 3 is a schematic diagram of a structure of an electronic device according to an embodiment of this application. As shown in FIG. 3, the electronic device 100 may include an outer screen 310 and an inner screen 320, and a size of the outer screen 310 is less than a size of the inner screen 320. The electronic device 100 may display various applications to a user through the outer screen 310 and the inner screen 320, and perform touch interaction with the user. In a folded state, the electronic device 100 interacts with the user through the outer screen 310. In an unfolded state, the electronic device 100 interacts with the user through the inner screen 320. Furthermore, when displaying various interfaces, the outer screen 310 may include a first display area 311 and a second display area 312. The first display area 311 includes a hole area (for example, a camera area shown in FIG. 3, it may be understood that the camera area is located in the first display area 311 and outside the second display area 312). The first display area 311 may be configured to present a decorative layer and a background layer (for related content of the background layer, refer to the following description, and details are not described herein) in the method in this embodiment of this application. In a case in which display content corresponding to an application interface is possibly blocked by the hole area, this helps to achieve, by adjusting transparency of the decorative layer and sizes of the background layer and the application layer, a purpose of normally using a function of the target application by the user, and improves aesthetics of the second interface. Further, the second display area 312 may be used to display a plurality of application layers corresponding to various third-party applications. This helps to ensure that display content corresponding to the application interface can be completely presented to the user.

S202. The electronic device 100 receives a first operation instruction applied to the target control.

The first operation instruction of the user for the target application may include a start instruction, a focus switching instruction, a close instruction, and the like. For example, if the user taps an icon corresponding to the target application on a home screen of the electronic device 100, this tap operation may be considered as a start instruction. If the user taps a function key in an application interface of the target application, this tap operation may be considered as a focus switching instruction. If the user slides upward from a bottom of a screen to a center of the screen in the application interface of the target application, this operation may be considered as a close instruction. Furthermore, when the user rotates the electronic device 100 in a process of operating (or using) the target application, it may also be considered that this is the first operation instruction for the target application, and the electronic device 100 may correspondingly adjust a display direction and a display location of content displayed on the outer screen.

S203. The electronic device 100 determines a display parameter of a layer set corresponding to the first operation instruction based on configuration information of the target application.

The layer set may include a background layer, an application layer, and a decorative layer, and the application layer includes display content corresponding to the first operation instruction. Specifically, the background layer may be set based on an element such as a color of the icon of the target application, and the application layer is used to present an application interface corresponding to the first operation instruction. It should be noted that a specific setting manner of the background layer is not limited in this application, and a person skilled in the art may adjust the setting manner based on an actual situation.

In some possible implementations, the configuration information of the target application may include display parameters corresponding to a plurality of application interfaces of the target application.

The determining a display parameter of a layer set corresponding to the first operation instruction based on configuration information of the target application may include:
determining a target interface based on the first operation instruction, where the target interface is an interface of the target application in response to the first operation instruction; and
determining a display parameter corresponding to the target interface from the display parameters corresponding to the plurality of application interfaces.

In some other possible implementations, the display parameters corresponding to the plurality of application interfaces may include sizes, display levels, and display content of a background layer and an application layer in a corresponding application interface, and display transparency of a decorative layer.

In some other possible implementations, a display level of the decorative layer is higher than the display levels of the background layer and the application layer; and
if the display level of the application layer is the same as the display level of the background layer, the size of the background layer is the same as a size of the first display area; or
if the display level of the application layer is higher than the display level of the background layer, the size of the background layer is greater than or equal to a size of the first display area.

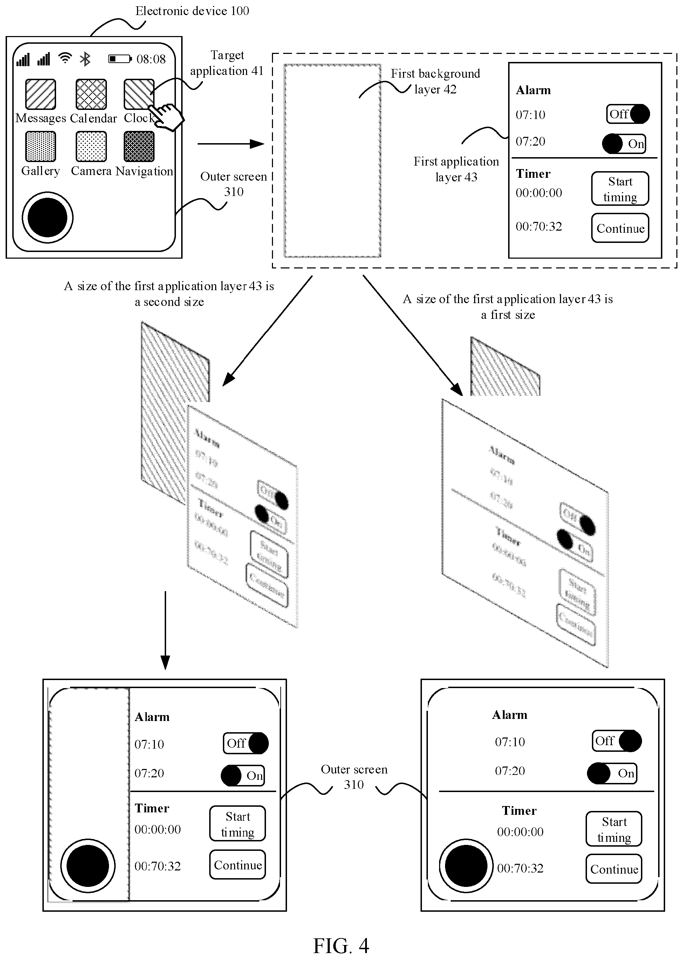

For example, based on a case in which the display level of the application layer is higher than the display level of the background layer, and the size of the background layer is equal to the size of the first display area, for a display effect of the application layer and the background layer, reference may be made to a related structure in FIG. 4. FIG. 4 is a schematic diagram of a display level relationship between a background layer and an application layer according to an embodiment of this application. As shown in FIG. 4, in response to a start instruction of the user for a target application 41 (a "clock" application program shown in FIG. 4), the electronic device 100 may generate a first background layer 42 and a first application layer 43. The first background layer 42 is used to present a background color corresponding to an icon of the target application 41, and the first application layer 43 is used to present display content corresponding to a home page of the target application 41. If a size of the first application layer 43 is a first size (which may be understood as that the first size is equal to a size of the entire outer screen), because a display level of display content corresponding to the first background layer 42 is lower than a display level of the first application layer 43, the electronic device 100 presents only display content corresponding to the first application layer 43 on the outer screen 310. If a size of the first application layer 43 is a second size (which may be understood as that the second size is equal to a size of the second display area), the electronic device 100 may present the interface shown in FIG. 4 on the outer screen 310 in a case in which the decorative layer is hidden. Specifically, the display content corresponding to the first background layer 42 is presented in the first display area, and the display content corresponding to the first application layer 43 is presented in the second display area.

In some other possible implementations, the method in this embodiment of this application may further include:
obtaining an information description file corresponding to the target application when downloading of the target application is complete in the electronic device, or when the target application runs to a target node; and
determining the configuration information of the target application based on the information description file.

Specifically, the target application may edit the configuration information in a form of metadata in the information description file AndroidManifest.xml. Further, when downloading of the target application is complete in the electronic device 100, the electronic device 100 may parse the metadata corresponding to the configuration information based on a PMS component, and store the parsed metadata (which may be understood as the configuration information) in a local memory of the electronic device 100. This helps the electronic device 100 subsequently to invoke the configuration information, to determine a display status (display or hide) of the decorative layer in the second interface. This helps to ensure that a function of the target application is normally used by the user, and further improves aesthetics of the second interface, thereby improving user experience. Alternatively, the target application may define, in an activity declaration period corresponding to the target application, a flag flag corresponding to the configuration information. When the target application runs to a procedure of the flag flag, the target application may add the configuration information to a layout parameter component LayoutParams by using the flag flag, so that the electronic device 100 can determine a display status (display or hide) of the decorative layer based on a parameter corresponding to the configuration information. This helps to ensure that a function of the target application is normally used by the user, and further improves aesthetics of the second interface, thereby improving user experience.

In some other possible implementations, the method in this embodiment of this application may further include:
receiving a power-on instruction for the electronic device; and
generating the decorative layer based on preset information in response to the power-on instruction, where the preset information may include a size of the decorative layer, display content corresponding to the decorative layer, and initial transparency of the decorative layer, and the initial transparency is second transparency.

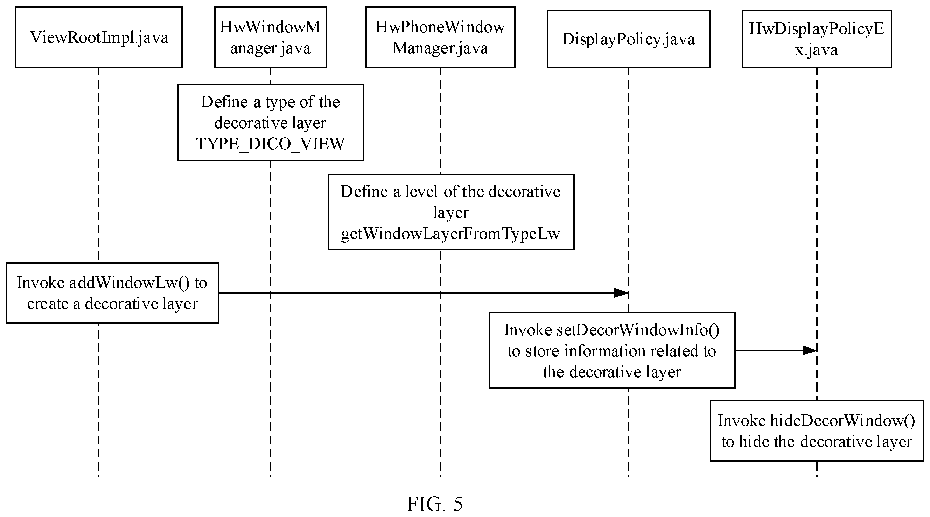

For example, referring to FIG. 5, FIG. 5 is a schematic flowchart of generating a decorative layer according to an embodiment of this application. As shown in FIG. 5, a person skilled in the art may define a type TYPE_DICO_VIEW of the decorative layer in a window management module HwWindowManager.java of the electronic device 100. The type may include the size of the decorative layer, layout information, and the display content corresponding to the decorative layer. The layout information of the decorative layer is related to location information of the first display area. The display content corresponding to the decorative layer may include a clock, a date, a weather, and the like, and may further include other capsule information in the electronic device 100. Specifically, the capsule information may be floating window information disposed based on a camera hole area, and may include but is not limited to related information such as flight information, a car service, a high-speed rail itinerary, a takeout status, express delivery tracking, movie viewing, a game, an audio, and a system service.

Further, the electronic device 100 may further define a display level getWindowLayerFromTypeLw of the decorative window based on a window management module HwPhoneWindowManager.java of the electronic device. In the method in this embodiment of this application, the display level of the decorative layer is set higher than the display levels of the background layer and the application layer. In addition, subsequently, a purpose of displaying or hiding the decorative layer can be achieved by adjusting only the transparency of the decorative layer. This is simpler and faster than adjusting the display level of the decorative layer based on the configuration information of the target application.

Furthermore, in response to power-on of the electronic device 100, a top-level view structure module ViewRootImpl.java in the electronic device 100 may create the decorative layer based on information related to the decorative layer (for example, the foregoing type and the foregoing display level) by using a window adding function addWindowLw(), and may store the information related to the decorative layer (for example, the foregoing type and the foregoing display level) by using a decorative layer creating function setDecorWindowInfo() of a display policy module DisplayPolicy.java. After creating of the decorative layer is complete, the electronic device 100 may achieve a purpose of hiding the decorative layer by using a window hiding function hideDecorWindow() of a hardware display policy module HwDisplayPolicyEx.java. Specifically, the transparency of the decorative layer may be adjusted to 100% to achieve a purpose of hiding the decorative layer.

For reference, if a size of an application layer corresponding to an application interface in the target application is the first size (which may be understood as that the first size is equal to the size of the entire outer screen), the target application may usually set display transparency corresponding to a decorative layer in the application interface to 0% (which may be understood as that the decorative layer is displayed in the application interface).

In another possible implementation, the target application may not separately set a size of an application layer for the outer screen of the electronic device 100, and only a size of an application layer corresponding to each application interface of the target application in an inner screen scenario needs to be disposed. When the user interacts with the electronic device 100 based on the outer screen, the electronic device 100 may adjust the application layer to the size of the second display area, thereby ensuring that the user can normally and completely use various functions corresponding to the target application in an outer screen scenario.

In another possible implementation, if the target application does not set transparency information corresponding to the decorative layer, the electronic device 100 may use, in a process in which the user uses the target application through the outer screen, a solution of "presenting the decorative layer and the background layer in the first display area, and presenting the application layer in the second display area".

S204. The electronic device 100 displays the second interface on the outer screen based on the display parameter in response to the first operation instruction.

The second interface may include a first display area and a second display area, the camera is located in the first display area and outside the second display area, the application layer is displayed in the second display area, and the decorative layer and the background layer are displayed in the first display area.

In some possible implementations, the displaying the second interface on the outer screen based on the display parameter in response to the first operation instruction may include:
generating the background layer and the application layer based on the display parameter in response to the first operation instruction;
adjusting the initial transparency of the decorative layer to the display transparency based on the display parameter;
generating the second interface based on the background layer, the application layer, and the decorative layer; and
displaying the second interface on the outer screen.

In some other possible implementations, before the displaying the second interface on the outer screen, the method may further include:
displaying a transition interface on the outer screen, where the transition interface may include the background layer, the application layer, and the decorative layer whose transparency is target transparency, and the target transparency is determined based on a playback area of an animation effect corresponding to the first operation instruction.

In some other possible implementations, the method in this embodiment of this application may further include:
if the playback area of the animation effect corresponding to the first operation instruction is the second display area, determining the target transparency as first transparency, where the first transparency is transparency corresponding to the decorative layer in the first interface; or
if the playback area of the animation effect corresponding to the first operation instruction is the entire outer screen, determining the target transparency as the second transparency, where the second transparency is corresponding transparency when the decorative layer is hidden.

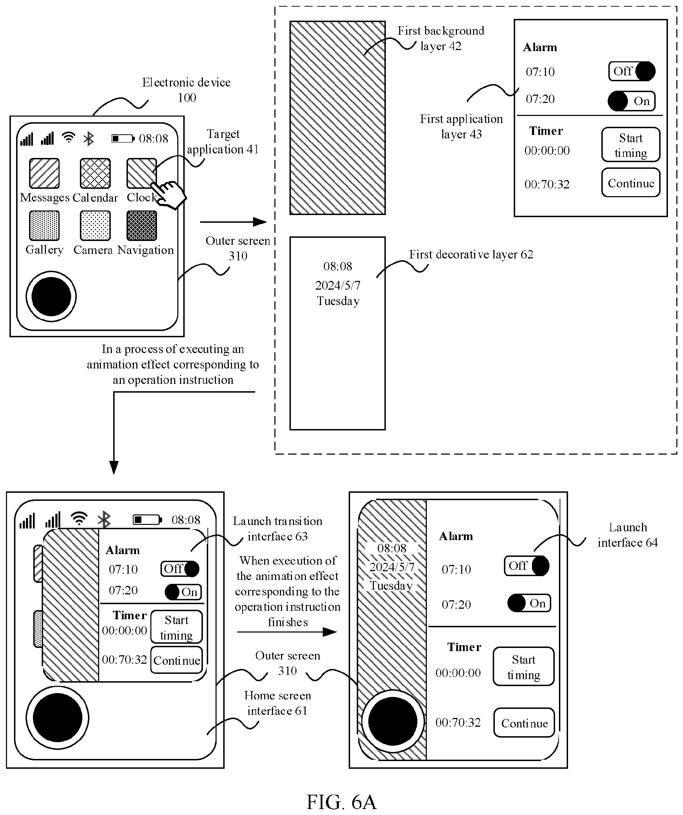

For example, referring to FIG. 6A-FIG. 6C, FIG. 6A-FIG. 6C are schematic diagrams of scenarios for displaying animation effects corresponding to a first operation instruction according to an embodiment of this application. With reference to FIG. 4 and FIG. 6A, in response to the start instruction of the user for the target application 41, the electronic device 100 may generate the first background layer 42 and the first application layer 43. The first background layer 42 is used to present the background color corresponding to the icon of the target application 41, and the first application layer 43 is used to present the display content corresponding to the home page of the target application 41. Further, it may be determined that a special effect corresponding to starting the target application 41 is "gradually covering a home screen interface 61 of the outer screen 310 with an application interface corresponding to the target application 41". It may be learned that, if a playback area of an animation effect corresponding to the start instruction is the entire outer screen, it is determined that the display transparency is the second transparency (it is assumed that the second transparency is 100%). In addition, transparency of a first decorative layer 62 needs to be adjusted to 100% in this process (which may be understood as hiding the first decorative layer 62 in a play process of an animation effect corresponding to the first operation instruction).

Specifically, in a case in which the size of the first application layer 43 is the second size (which may be understood as that the second size is equal to the size of the second display area) and the first decorative layer 62 is displayed (which may be understood as that display transparency is 0%), the electronic device 100 may gradually cover the home screen interface 61 (in this scenario, the home screen interface 61 is equivalent to the foregoing first interface) with a launch transition interface 63. The launch transition interface 63 may include the first background layer 42, the first application layer 43, and the first decorative layer 62 whose transparency is the second transparency (being 100% herein). In a presentation effect, the user may see display content corresponding to the first background layer 42 and the first application layer 43 in the launch transition interface 63. The first background layer 42 is used to present a background color corresponding to the target application 41. Further, because the size of the first application layer 43 is the size corresponding to the second display area, and the target application 41 may set the display transparency of the first decorative layer 62 to 0% (which may be understood as displaying the first decorative layer 62 in the second interface). In this case, when the launch transition interface 63 completely covers the home screen interface 61, the electronic device 100 may present a launch interface 64 (in this scenario, the launch interface 64 is equivalent to the foregoing second interface) on the outer screen 310. In a presentation effect, the user may see display content corresponding to the first decorative layer 62, the first background layer 42, and the first application layer 43 in the launch interface 64.

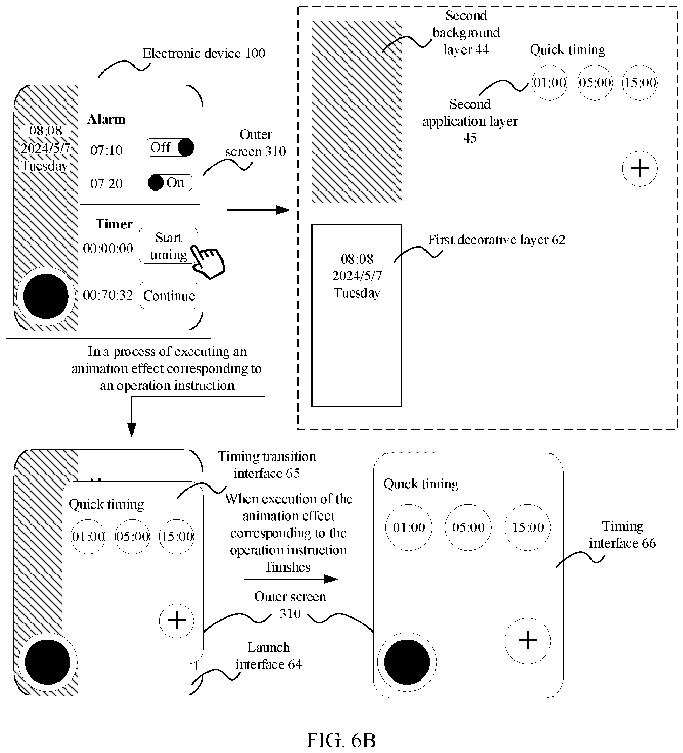

Further, with reference to FIG. 4 and FIG. 6B, in response to a focus switching instruction of the user for the launch interface 64 of the target application 41 (for example, in FIG. 6B, the user taps a "start timing" button in the application interface), the electronic device 100 may determine a second background layer 44 and a second application layer 45 that are corresponding to a "start timing" function. The second background layer 44 and the second application layer 45 are used to present display content corresponding to a timing interface of the target application 41. Further, if a size of the second application layer 45 corresponding to the timing interface is a size corresponding to the outer screen 310 (which is equivalent to a sum of a size of the first display area and the size of the second display area), it may be determined that a special effect of switching from the launch interface 64 to a timing page is "gradually covering the launch interface 64 with the timing interface". It may be learned that, if a playback area of an animation effect corresponding to the focus switching instruction is the entire outer screen, it is determined that the display transparency is 100%. In addition, transparency of the first decorative layer 62 needs to be adjusted to 100% in this process (which may be understood as hiding the first decorative layer 62 in a play process of an animation effect corresponding to the first operation instruction).

Specifically, in a case in which the size of the first application layer 43 is the first size (which may be understood as that the first size is equal to the size of the entire outer screen) and the first decorative layer 62 is hidden (which may be understood as that the display transparency is 100%), the electronic device 100 may gradually cover the launch interface 64 with a timing transition interface 65 (in this scenario, the launch interface 64 is equivalent to the foregoing first interface). The timing transition interface 65 may include the second background layer 44, the second application layer 45, and the first decorative layer 62 whose transparency is target transparency (being 100% herein). In a presentation effect, the user may see display content corresponding to the second application layer 45 and display content corresponding to a part of the second background layer 44 in the launch transition interface 63. In the play process of the animation effect corresponding to the first operation instruction, the timing transition interface 65 presents increasingly less content corresponding to the second background layer 44 and the first application layer 43, and increasingly more content corresponding to the second application layer 45. Further, because the size of the second application layer 45 is the first size (which may be understood as that the first size is equal to the size of the entire outer screen), the target application 41 may set the display transparency of the first decorative layer 62 to 100% (which may be understood as hiding the first decorative layer 62 in the second interface). When the timing transition interface 65 completely covers the launch interface 64, the electronic device 100 may present a timing interface 66 (in this scenario, the timing interface 66 is equivalent to the foregoing second interface) on the outer screen 310. In a presentation effect, the user may see the display content corresponding to the second application layer 45 in the timing interface 66. When the display content corresponding to the second application layer 45 is all displayed in the second display area, it may be considered that play of the animation effect corresponding to the first operation instruction finishes.

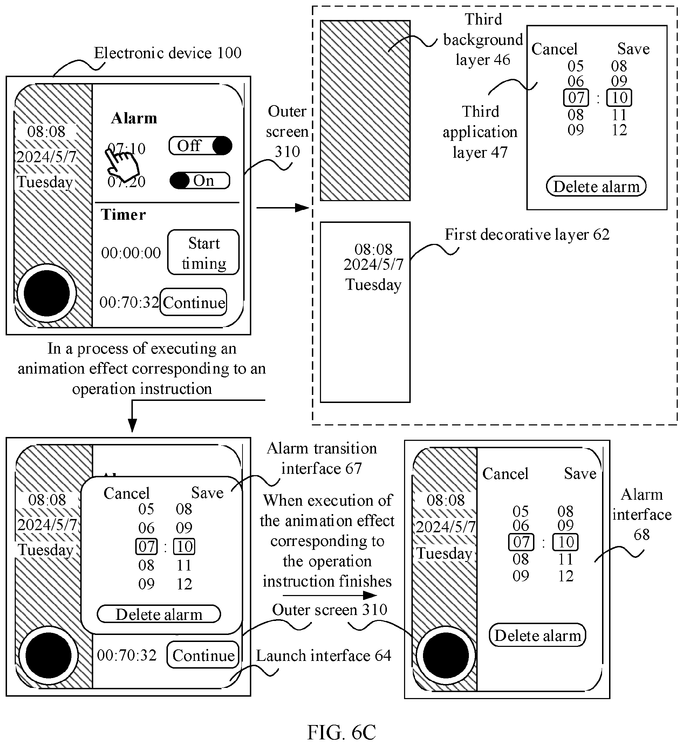

Furthermore, with reference to FIG. 4 and FIG. 6C, in response to a focus switching instruction of the user for the launch interface 64 of the target application 41 (for example, in FIG. 6C, the user taps a "07:10" time button in the application interface), the electronic device 100 may determine a third background layer 46 and a third application layer 47 that are corresponding to an "alarm" function. The third background layer 46 is used to present the background color corresponding to the target application 41, and the third application layer 47 is used to present display content corresponding to an alarm interface of the target application 41. Further, if a size of the third application layer 47 corresponding to the alarm interface is the size corresponding to the second display area, it may be determined that a target special effect of switching from the launch interface 64 to an alarm page is "gradually covering actual content corresponding to the launch interface 64 in the second display area with the alarm page". It may be learned that if a motion range of an animation effect corresponding to the first operation instruction corresponding to the focus switching instruction is the second display area, it is determined that the display transparency is 0%. In addition, transparency of the first decorative layer 62 needs to be adjusted to 0% in this process (which may be understood as displaying the first decorative layer 62 in the play process of the animation effect corresponding to the first operation instruction).

Specifically, in a case in which the size of the first application layer 43 is the second size (which may be understood as that the second size is equal to the size of the second display area) and the first decorative layer 62 is displayed (which may be understood as that the display transparency is 0%), the electronic device 100 may gradually cover the launch interface 64 (in this scenario, the timing interface 66 is equivalent to the foregoing first interface) with an alarm transition interface 67. The alarm transition interface 67 may include the background layer and the application layer (including the third background layer 46 and the third application layer 47), and the first decorative layer 62 whose transparency is target transparency (being 0% herein). In a presentation effect, the user may see display content corresponding to the third background layer 46 and the third application layer 47 in the alarm transition interface 67. Further, because the size of the third application layer 47 is the size corresponding to the second display area, the target application 41 may set the display transparency of the first decorative layer 62 to 0% (which may be understood as displaying the first decorative layer 62 in the second interface). When the alarm transition interface 67 completely covers the launch interface 64, the electronic device 100 may present an alarm interface 68 (in this scenario, the alarm interface 68 is equivalent to the foregoing second interface) on the outer screen 310. In a presentation effect, the user may see content corresponding to the first decorative layer 62, the third background layer 46, and the third application layer 47 in the alarm interface 68. In a possible implementation, in a process of presenting the alarm transition interface 67, the user may see, in the alarm transition interface 67, the display content corresponding to the third background layer 46, some display content corresponding to the third application layer 47, and some display content corresponding to the first application layer 43. In an execution process of the animation effect corresponding to the first operation instruction, the outer screen 310 presents increasingly less display content corresponding to the first application layer 43 and increasingly more display content corresponding to the third application layer 47. Until all display content corresponding to the third application layer 47 is displayed in the second display area, it may be considered that execution of the animation effect corresponding to the first operation instruction finishes.

It should be noted that the electronic device 100 may generate the background layer only once in a process of using a same target application. For example, with reference to FIG. 4 and FIG. 6A-FIG. 6C, after the user starts the target application 41, the electronic device 100 generates the background layer corresponding to the target application 41, and background layers corresponding to functions (for example, timing, an alarm, and a stopwatch) in the target application 41 are a same one. It may be understood that the foregoing first background layer 42, the foregoing second background layer 44, and the foregoing third background layer 46 are a same layer. Further, in a process in which the user uses different functions of the target application 41, the electronic device 100 does not repeatedly generate the background layer for a plurality of times. It may be understood that, in a process in which the user uses the target application 41, the electronic device 100 always displays the first background layer 42. However, the first background layer 42 is referred to as the second background layer 44 in the timing interface 66 corresponding to the "timing" function, and is referred to as the third background layer 46 in the alarm interface 68 corresponding to the "alarm" function.

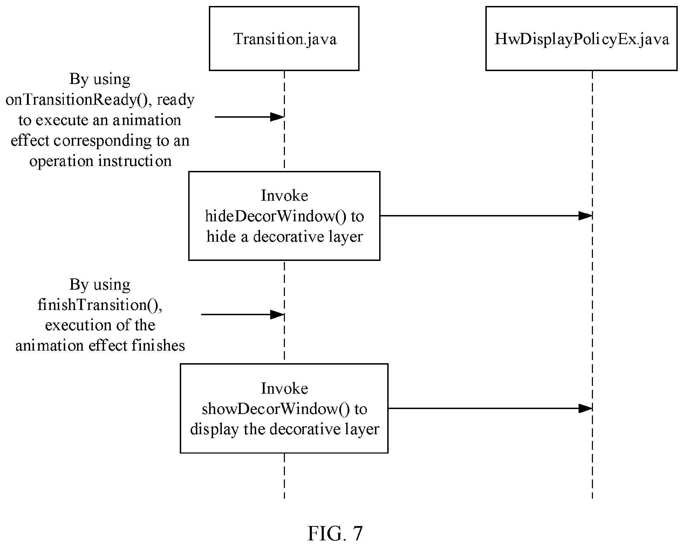

In some other possible implementations, with reference to FIG. 5 and FIG. 7, FIG. 7 is a schematic flowchart of a procedure of executing an animation effect according to an embodiment of this application. As shown in FIG. 7, in a case in which the decorative layer needs to be hidden in the execution process of the animation effect corresponding to the first operation instruction of the user, the electronic device 100 may send an instruction for hiding the decorative layer to HwDisplayPolicyEx.java by invoking hideDecorWindow() by an animation effect module Transition.java while starting, by using a special effect readiness function onTransitionReady(), to be ready to execute the animation effect corresponding to the first operation instruction, thereby achieving a purpose of hiding the decorative layer in the play process of the animation effect corresponding to the first operation instruction. Further, in a case in which the decorative layer needs to be displayed in the second interface corresponding to the first operation instruction of the user, the electronic device 100 may respond to execution of an animation effect finish function finishTransition(), and may simultaneously send an instruction for displaying the decorative layer to HwDisplayPolicyEx.java by invoking a decorative layer display function showDecorWindow() by Transition.java, thereby achieving a purpose of displaying the decorative layer in the second interface after execution of the animation effect corresponding to the first operation instruction finishes.

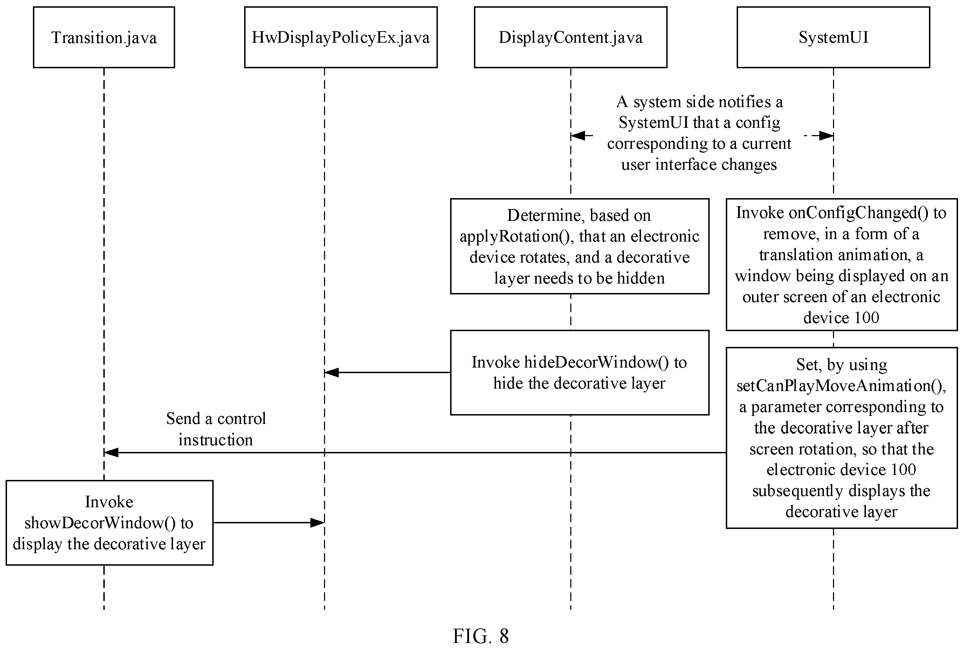

In some other possible implementations, with reference to FIG. 5, FIG. 7, and FIG. 8, FIG. 8 is a schematic flowchart of displaying a decorative interface corresponding to interface rotation according to an embodiment of this application. As shown in FIG. 7, the electronic device 100 is rotated in a process of using the target application by the user. A system side of the electronic device may notify a system user animation effect application SystemUI that a parameter config corresponding to a current user interface changes. Further, a display content module DisplayContent.java may determine, based on a rotation function applyRotation(), that the electronic device 100 is rotated in the process of using the target application by the user. In addition, an instruction for hiding the decorative layer may be sent to HwDisplayPolicyEx.java by invoking hideDecorWindow(), thereby achieving a purpose of hiding the decorative layer in the play process of the animation effect corresponding to the first operation instruction, and avoiding a fault such as error display on the outer screen. Further, after receiving a notification sent by the system side, the SystemUI invokes a parameter change function onConfigChanged() to remove, in a form of a translation animation, a window being displayed on the outer screen of the electronic device 100, and sets, by using a parameter setting function setCanPlayMoveAnimation(), a parameter corresponding to the decorative layer (for example, a size of the decorative layer, a placement direction and a placement location of the decorative layer) after screen rotation. Further, after the electronic device 100 generates a new decorative layer based on the parameter, the SystemUI may send a control instruction to Transition.java, and control Transition.java to invoke showDecorWindow() to send an instruction for displaying the decorative layer to HwDisplayPolicyEx.java, thereby achieving a purpose of displaying the decorative layer in the second interface after execution of the animation effect corresponding to the first operation instruction finishes.

It should be noted that in the foregoing process in which hideDecorWindow() is invoked, HwDisplayPolicyEx.java first determines whether the decorative layer in a currently displayed page, interface, or window is in a hidden state (which may be understood as determining whether currently corresponding transparency of the decorative layer is 100%). If the decorative layer is currently in a hidden state, the transparency of the decorative layer does not need to be adjusted. If the decorative layer is currently in a display state, the transparency of the decorative layer needs to be adjusted to 100%.

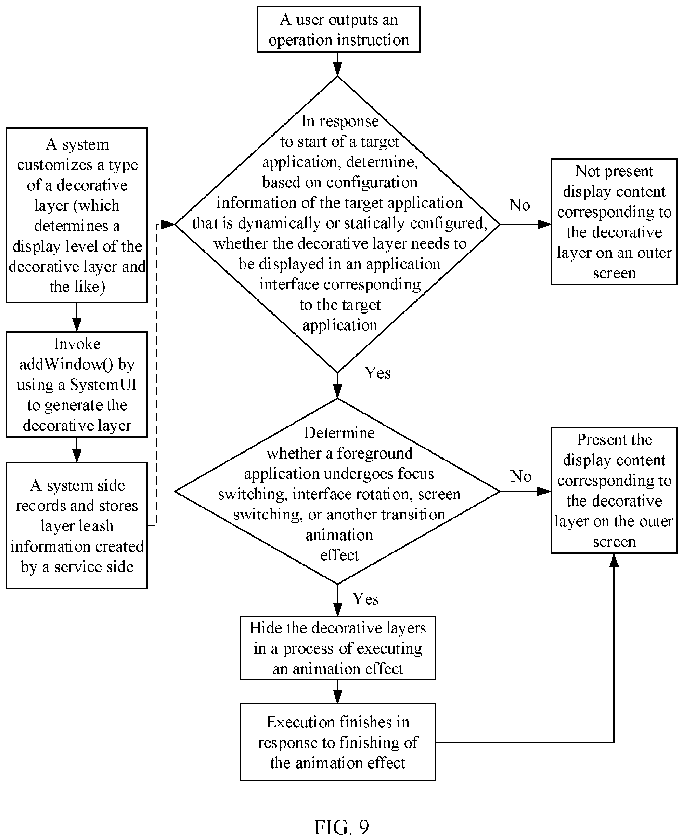

Referring to FIG. 9, FIG. 9 is a schematic flowchart of another method for displaying an application interface according to an embodiment of this application.

As shown in FIG. 9, an electronic device 100 may customize a type of a decorative layer by the system based on preset information. By defining the type of the decorative layer, a size and layout information of the decorative layer, and display content corresponding to the decorative layer may be determined, and a display level corresponding to the decorative layer may be further determined. Further, the electronic device 100 may invoke addWindow() by using a SystemUI to generate the decorative layer, and a system side records and stores layer leash information (which may be understood herein as information corresponding to the foregoing decorative layer) created by a service side (which may be understood herein as a SystemUI side). It should be noted that the electronic device 100 may further generate the decorative layer by using another application having a layer generation function. This is not limited in this application.

Further, in response to start of the target application, the electronic device 100 may determine, based on configuration information of the target application that is dynamically or statically configured, whether the decorative layer needs to be displayed in an application interface corresponding to the target application. In a case in which the decorative layer needs to be displayed, it is determined whether a foreground application undergoes focus switching, interface rotation, screen switching, or another transition animation effect. If a determining result is yes, the decorative layer is hidden in a process of executing the animation effect, and the display content corresponding to the decorative layer is presented on an outer screen when execution of the animation effect finishes. If a determining result is no, the display content corresponding to the decorative layer is directly presented on the outer screen. Furthermore, in a case in which the decorative layer does not need to be displayed (which may be understood as hiding the decorative layer), the display content corresponding to the decorative layer is not presented on the outer screen.

In conclusion, in the method in this embodiment of this application, a processing procedure of displaying the application interface can be highly decoupled on an application side and the system side. The application side only transmits, to the system side in a form of configuration information, display content corresponding to different operation pages and display requirements of the different operation pages for the decorative layer. Subsequently, the system side generates and presents different layers based on the first operation instruction of the user and the configuration information. This helps to efficiently manage the display state of the decorative layer, and further helps to avoid a case of a layout chaos of the application interface due to mismatch between the target application and the decorative layer, thereby improving user experience. Further, in the method in this embodiment of this application, by linking the decorative layer with the animation effect of the foreground application, the user is provided with an impression that the decorative layer, the background layer, and the application layer are a whole, so that UI visual experience is unified. This helps to further improve user experience.

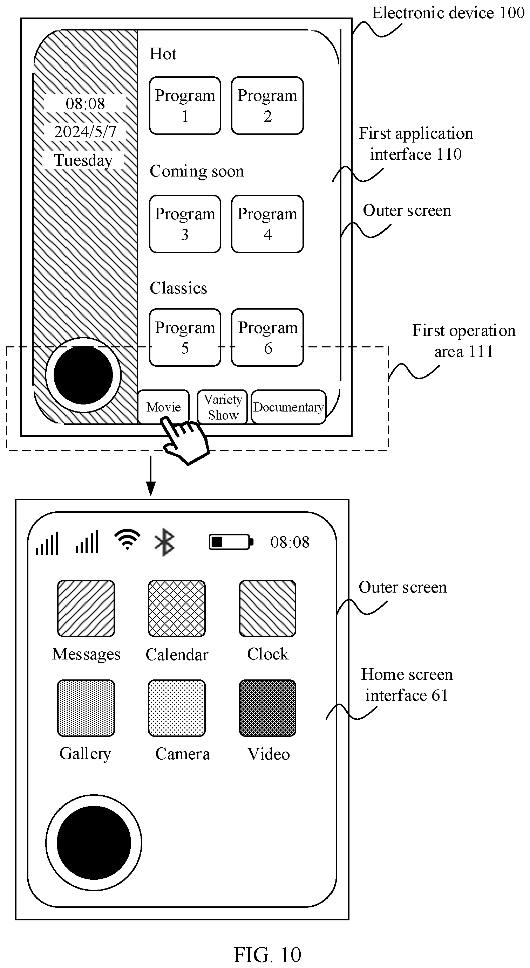

In a possible implementation scenario, in a folded state of the electronic device 100, the user may interact with the electronic device through the outer screen. However, due to problems that the outer screen is too small and various three-party applications are incompatible with a layout of the outer screen, it easily causes a case in which a function operation manner corresponding to the third-party application conflicts with a function operation manner corresponding to an electronic device system. Consequently, a real use requirement of the user cannot be accurately identified, and poor user experience is brought to the user. For example, referring to FIG. 10, FIG. 10 is a schematic diagram of a scenario of an operation on an outer screen of a foldable-screen mobile phone according to a conventional technology. As shown in FIG. 10, the electronic device 100 displays a first application interface 110 corresponding to a "video" application (as shown in FIG. 10, the first application interface 110 displays programs 1~6, which are six types of different video content) on the outer screen. A first operation area 111 exists at a bottom of the outer screen, and the first operation area 111 is a system operation hot area, and may have a function such as "one-tap return to home screen". Specifically, when the user wants to view various content in a category of "movie", the user may tap a "movie" control. Further, in response to tapping the "movie" control in the first application interface 110 by the user (as shown in FIG. 10, the "movie" control is located in the first operation area 111), the electronic device 100 may mistakenly believe that the user wants to return to the home screen of the outer screen, and in this case, the electronic device 100 directly displays the home screen interface 61 for the user.

It may be learned that, in a case in which "the function operation manner corresponding to the third-party application conflicts with the function operation manner corresponding to the electronic device system", the electronic device 100 cannot accurately identify a real operation intention of the user, failing to provide a correct service for the user. This brings poor user experience to the user.

A difference is that, according to the method in this embodiment of this application, a real operation intention of the user can be confirmed based on a motion track of an operation instruction. Specifically, when the electronic device receives an operation instruction applied to the first application interface, if a start point of a motion track corresponding to the operation instruction is in the first operation area, a target layer may be generated, and a display level of the target layer is set to be lower than a display level of each layer in a first layer set, so that the target layer is not perceived by the user. Further, if the motion track corresponding to the operation instruction meets a preset condition, it may be considered that the operation intention of the user is to return to the home screen of the outer screen, so that the home screen can be displayed on the outer screen based on the target layer. If the motion track corresponding to the operation instruction does not meet the preset condition, it may be considered that the intention of the operation instruction of the user is to use a related function of the target application, so that the target layer can be cleared, and a second application interface corresponding to the operation instruction can be displayed on the outer screen. This helps to improve accuracy of identifying the operation intention by the electronic device 100, thereby effectively improving user experience.

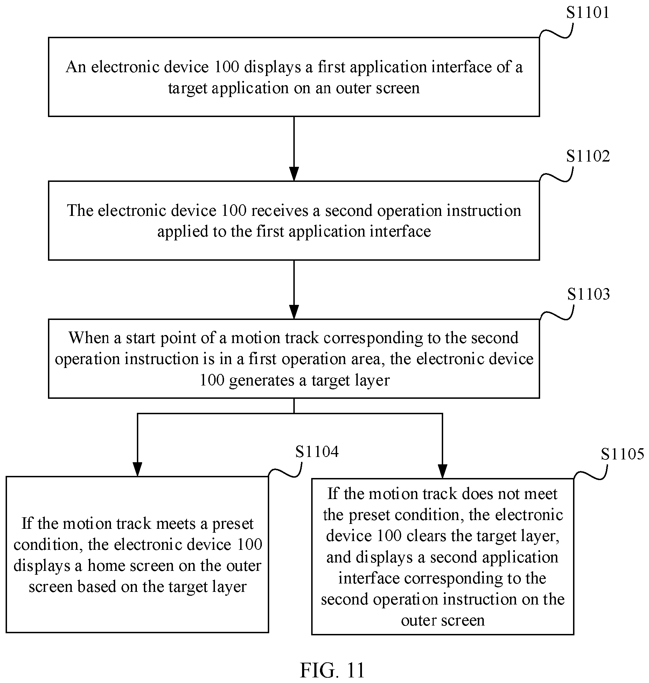

Specifically, referring to FIG. 11, FIG. 11 is a schematic flowchart of a method for displaying an interface based on an operation gesture according to an embodiment of this application.

As shown in FIG. 11, the method may include:
S1101. The electronic device 100 displays a first application interface of a target application on an outer screen.

The first application interface is one of a plurality of application interfaces corresponding to the target application, each application interface has a corresponding layer set, and the first application interface is corresponding to a first layer set. For example, the first layer set may include a decorative layer, a background layer, and a first application layer. Specifically, the background layer may be set based on an element such as a color of an icon of the target application. It should be noted that a specific setting manner of the background layer is not limited in this application, and a person skilled in the art may adjust the setting manner based on an actual situation.

Further, a display parameter of a layer set corresponding to various application interfaces in a first application is determined by using configuration information of the target application.

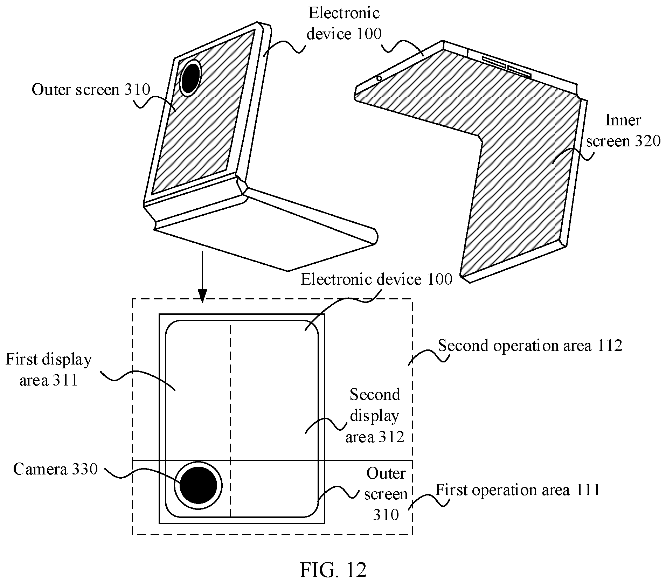

For example, referring to FIG. 12, FIG. 12 is a schematic diagram of a structure of an electronic device according to an embodiment of this application. As shown in FIG. 12, the electronic device 100 may include an outer screen 310 and an inner screen 320, and a size of the outer screen 310 is less than a size of the inner screen 320. The electronic device 100 may display various applications to a user through the outer screen 310 and the inner screen 320, and perform touch interaction with the user. In a folded state, the electronic device 100 interacts with the user through the outer screen 310. In an unfolded state, the electronic device 100 interacts with the user through the inner screen 320. Furthermore, a first operation area 111 and a second operation area 112 exist in the outer screen 310, the first operation area 111 is located at a bottom of the outer screen 310, and the second operation area 112 is located in an upper part of the first operation area 111. It should be noted that, the first operation area 111 and the second operation area 112 exist in the outer screen 310, the first operation area 111 is located at the bottom of the outer screen 310, and the second operation area 112 is located in the upper part of the first operation area 111.

S1102. The electronic device 100 receives a second operation instruction applied to the first application interface.

Similar to the first operation instruction, the second operation instruction may include a start instruction, a focus switching instruction, a close instruction, and the like.

S1103. When a start point of a motion track of the second operation instruction is in the first operation area, the electronic device 100 generates a target layer.

The target layer is a display layer corresponding to a home screen of the outer screen, and a display level of the target layer is lower than a display level of each layer in the first layer set.

For example, when the start point of the motion track corresponding to the second operation instruction is in the first operation area, the electronic device 100 considers the home screen of the outer screen as a foreground application, and starts to generate a display layer corresponding to the foreground application. Different from a conventional technology, after the home screen of the outer screen is determined as the foreground application, the electronic device 100 in the method in this embodiment of this application does not immediately present display content corresponding to the foreground application (namely, the home screen of the outer screen) to the user, but determines a real operation intention of the user based on a complete motion track of the second operation instruction. For a specific determining process of the operation intention, reference may be made to S1104 and S1105 and content in the embodiment thereof. Details are not described herein.

S1104. If the motion track meets a preset condition, the electronic device 100 displays the home screen on the outer screen based on the target layer.

The preset condition may be that a touch point corresponding to the motion track slides upward from the first operation area to a center location of the second operation area.

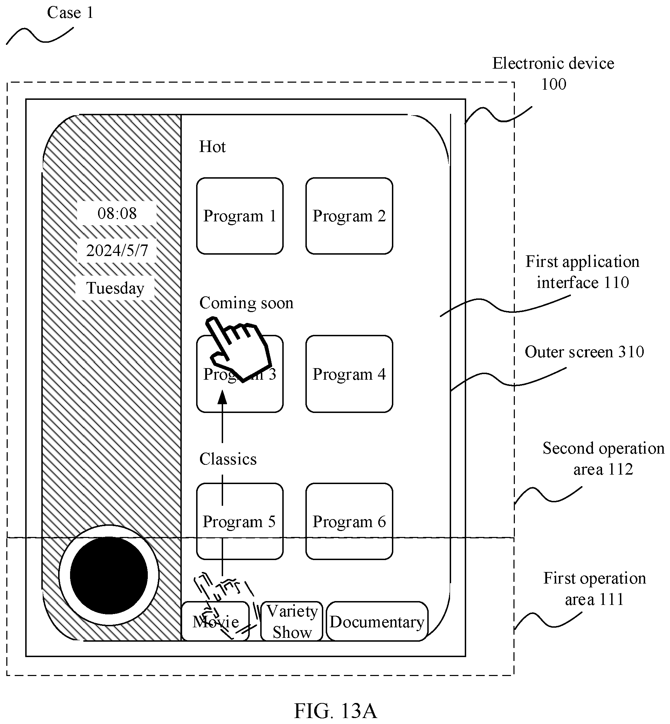

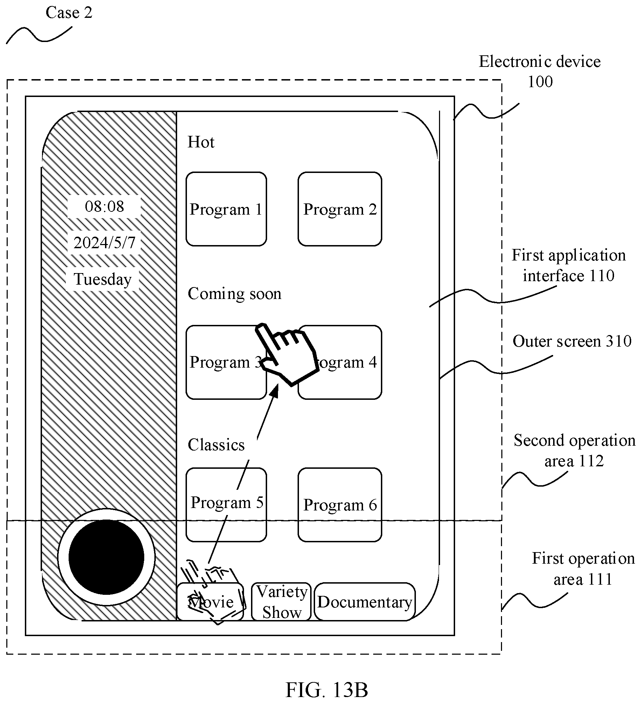

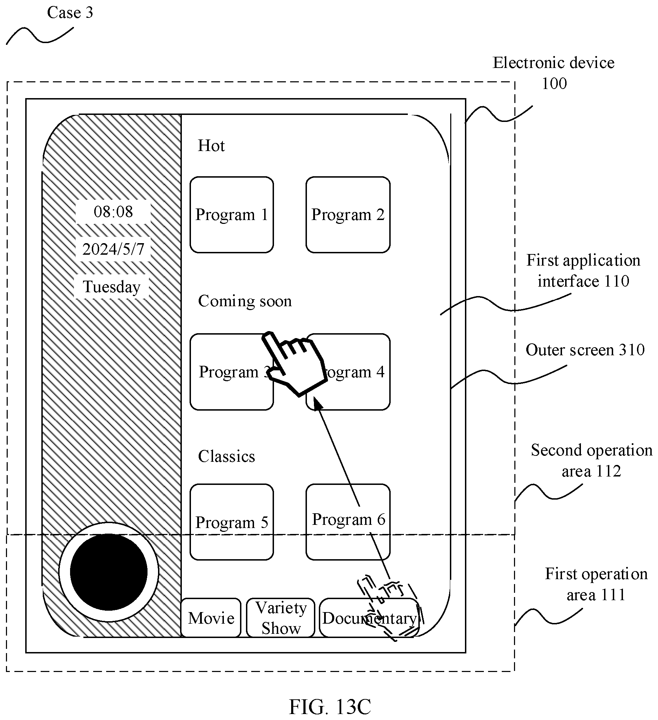

For example, referring to FIG. 13A to FIG. 13C, FIG. 13A to FIG. 13C are a schematic diagram of a scenario for determining a preset condition according to an embodiment of this application. For example, the preset condition corresponding to the method in this embodiment of this application may be: When the motion track corresponding to the second operation instruction is "sliding from the first operation area to the center location of the second operation area", it may be considered that the motion track meets the preset condition. Specifically, as shown in a case 1 in FIG. 13A, when the motion track corresponding to the second operation instruction of the user is "sliding vertically upward from the first operation area 111 to the center location of the second operation area 112", it may be considered that the motion track corresponding to the second operation instruction of the user meets the preset condition, and it may be further considered that the operation intention of the user is to "exit the first application and return to the home screen on the outer screen". As shown in a case 2 in FIG. 13B, when the motion track corresponding to the second operation instruction of the user is "sliding diagonally from the first operation area 111 to the center location of the second operation area 112 in an upper-left direction", it may also be considered that the motion track corresponding to the second operation instruction of the user meets the preset condition, and it may be further considered that the operation intention of the user is to "exit the first application and return to the home screen on the outer screen". As shown in a case 3 in FIG. 13C, when the motion track corresponding to the second operation instruction of the user is "sliding diagonally from the first operation area 111 to the center location of the second operation area 112 in an upper-right direction", it may also be considered that the motion track corresponding to the second operation instruction of the user meets the preset condition, and it may be further considered that the operation intention of the user is to "exit the first application and return to the home screen on the outer screen".

It should be noted that an end point of the motion track in the preset condition may be a center location of the outer screen or another specified location. This is not limited in this application. Specifically, the preset condition may be set by a person skilled in the art based on an actual situation.

In some possible implementations, the method may further include:
if the motion track meets the preset condition, displaying the home screen on the outer screen based on the decorative layer and the target layer, where transparency of the decorative layer is second transparency.

The second transparency is corresponding transparency when the decorative layer is hidden, and a size of the target layer is the same as a size of the outer screen.

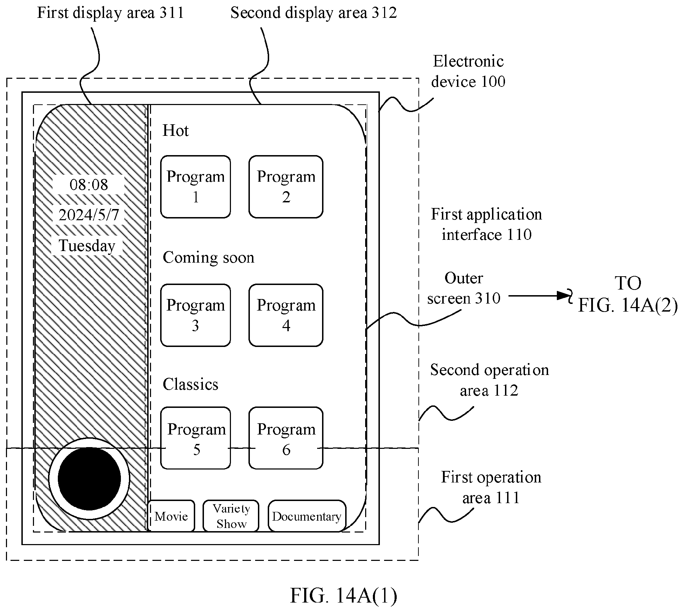

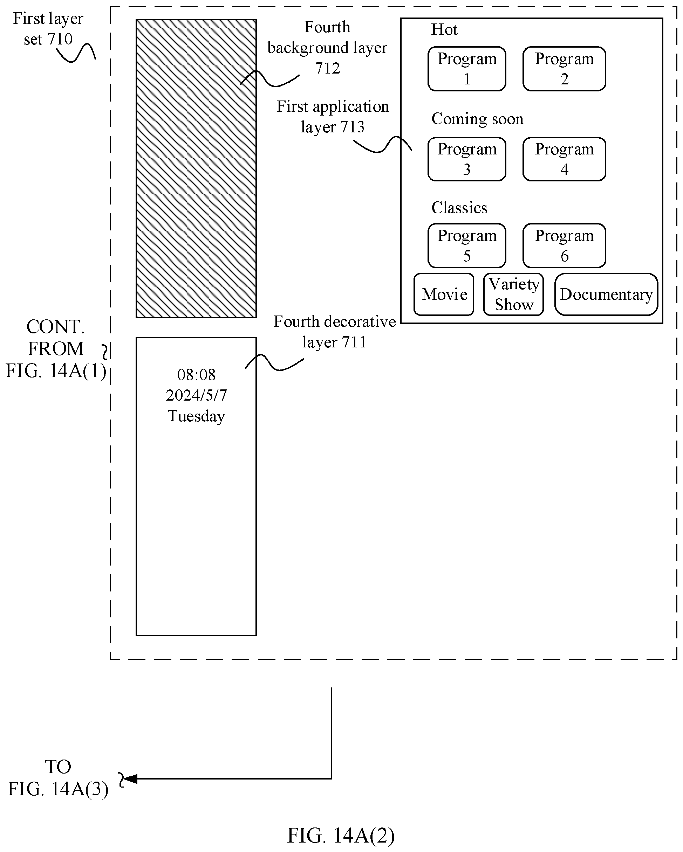

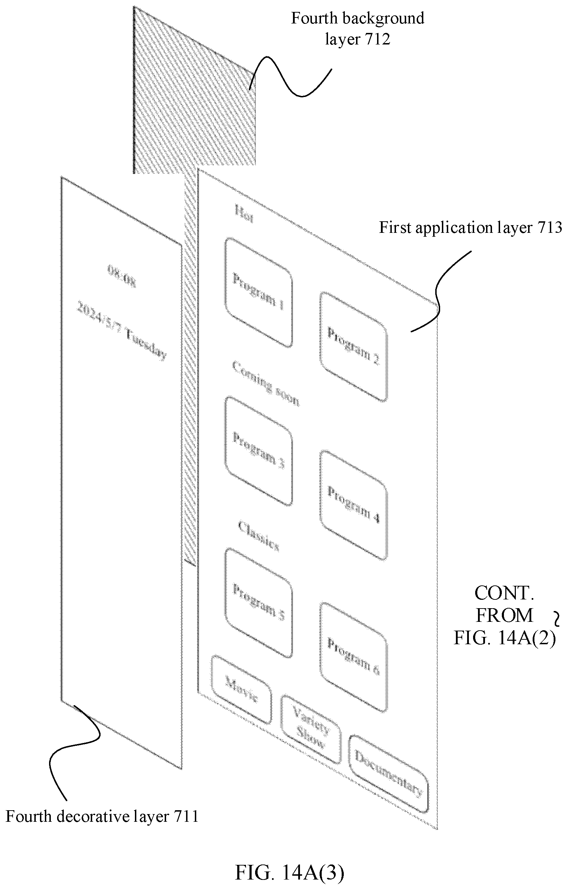

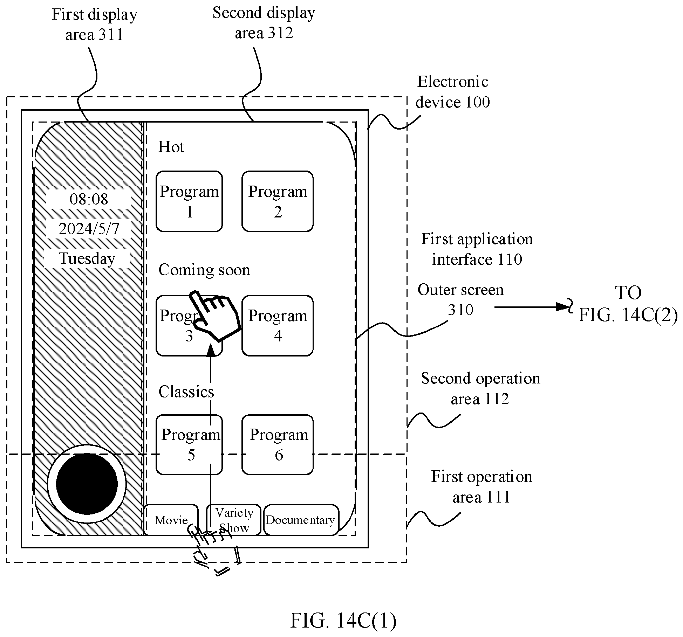

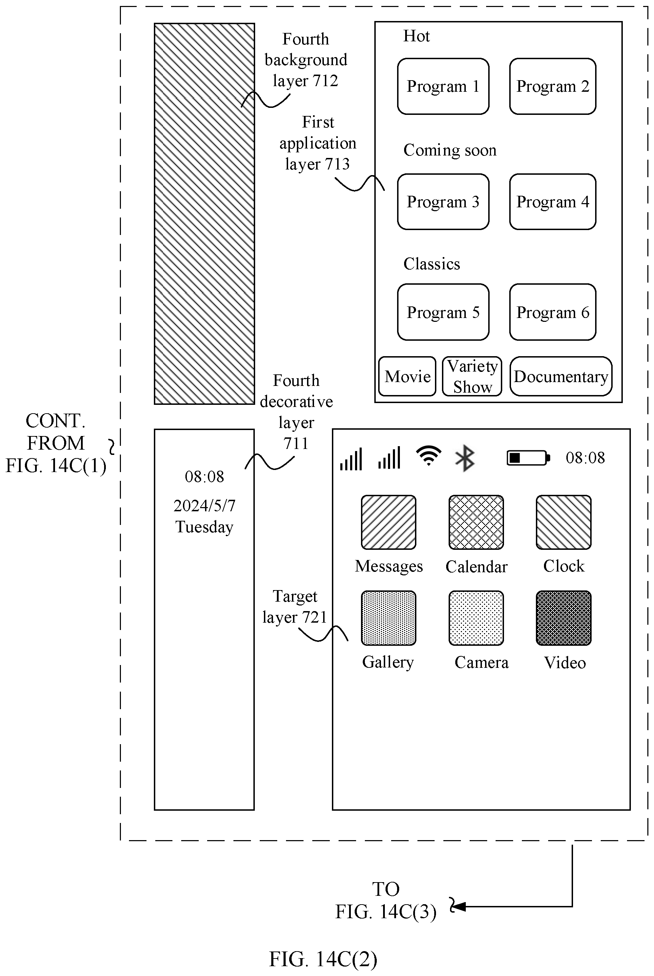

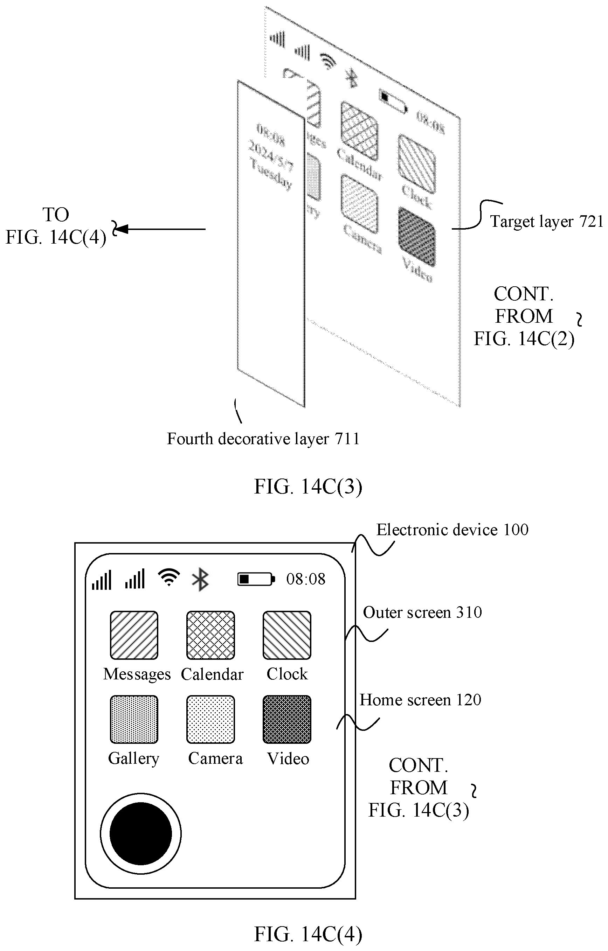

For example, referring to FIG. 14A(1) to FIG. 14A(3)-FIG. 14C(1) to FIG. 14C(4), FIG. 14A(1) to FIG. 14A(3)-FIG. 14C(1) to FIG. 14C(4) are schematic diagrams of scenarios of interface display according to an embodiment of this application. As shown in FIG. 14A(1) to FIG. 14A(3), when the user uses a "video" application program (which may be understood as that in FIG. 13A to FIG. 13C, the "video" application program is the foregoing target application in the solution in this application), the electronic device 100 may present a first application interface 110 (which may be understood as a home page interface of the "video" application program) to the user on the outer screen 310. The first application interface 110 correspondingly includes a first layer set 710, and the first layer set 710 includes a fourth decorative layer 711, a fourth background layer 712, and a first application layer 713. The fourth decorative layer 711 and the fourth background layer 712 are displayed in a first display area 311 of the first application interface 110, the fourth background layer 712 is used to present a background color corresponding to the "video" application program, the first application layer 713 is displayed in a second display area 312 of the first application interface 110, and a display level of the fourth decorative layer 711 is higher than display levels of the fourth background layer 712 and the first application layer 713.

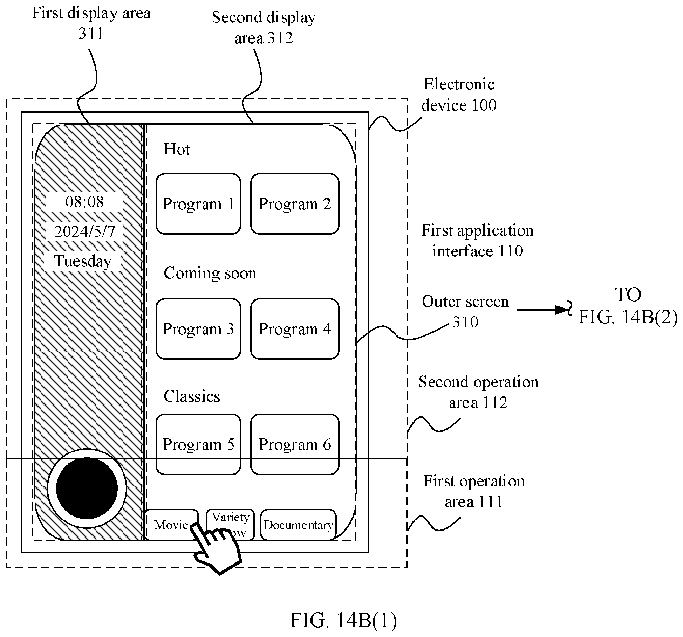

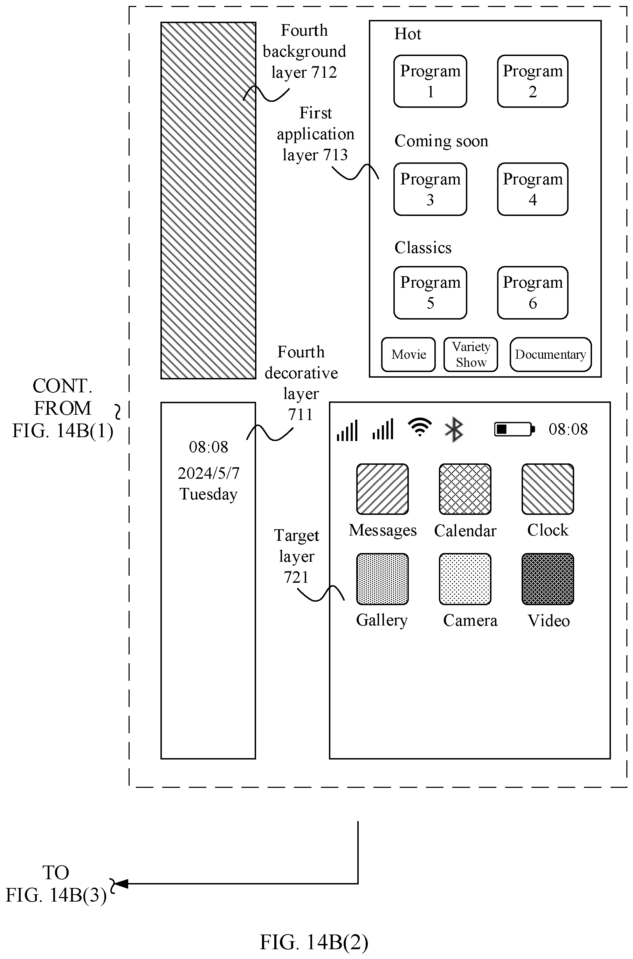

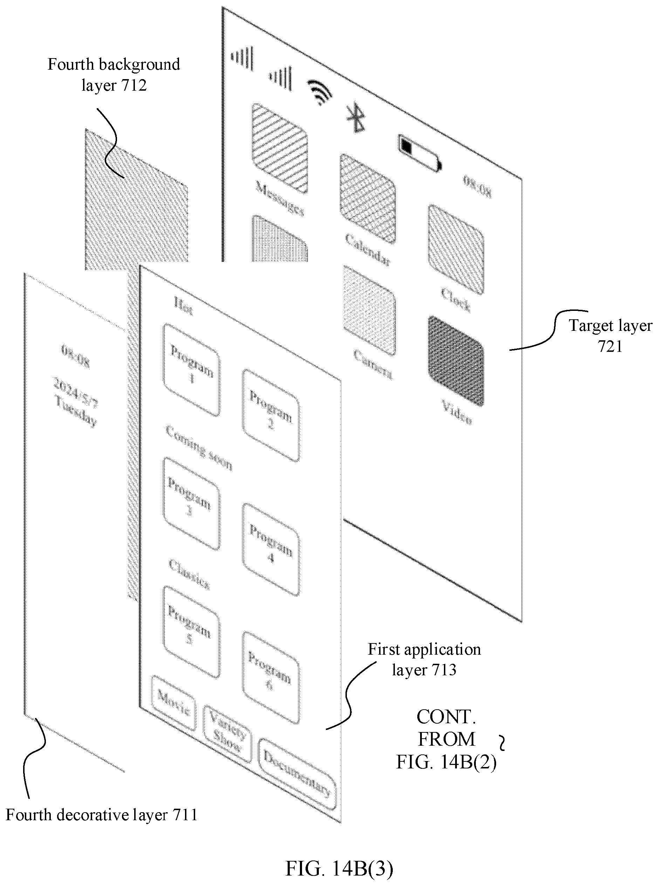

Further, as shown in FIG. 14B(1) to FIG. 14B(3), in response to touching the first operation area 111 of the outer screen 310 by hand by the user at this time, the home screen of the outer screen is determined as the foreground application, and a target layer 721 corresponding to the home screen of the outer screen is generated. In this case, a display level of the target layer 721 is lower than the display levels of the fourth background layer 712 and the first application layer 713, and the user cannot view display content corresponding to the target layer 721 on the outer screen 310. Consequently, the user can still view only display content corresponding to the first application interface 110 at this time.

Furthermore, as shown in FIG. 14C(1) to FIG. 14C(4), under a premise that a finger of the user does not leave the outer screen 310, if a hand of the user moves from the first operation area 111 to the center location of the second operation area 112 (it may be considered that a motion track corresponding to an operation instruction of the user meets the preset condition), it may be considered that an operation intention of the user is to "exit the first application and return to the home screen of the outer screen", and the electronic device 100 may present the display content corresponding to the target layer 721 to the user. Specifically, the electronic device 100 may generate a home screen interface 61 based on the fourth decorative layer 711 whose transparency is second transparency (which may be understood as a hidden decorative layer) and the target layer 721, and display the home screen interface 61 on the outer screen 310. In addition, the electronic device 100 may clear the first layer set 710.

S1105. If the motion track does not meet the preset condition, the electronic device 100 clears the target layer, and displays a second application interface corresponding to the second operation instruction on the outer screen.

It may be understood that if the motion track does not meet the preset condition, it may be considered that the operation intention of the user is to "continue to stay in the target application and use a function in the target application". Therefore, it may be considered that after the operation instruction is input, the display content corresponding to the home screen on the outer screen does not need to be presented to the user. In this case, the target layer may be cleared, and the second application interface corresponding to the second operation instruction may be presented to the user on the outer screen.

In some possible implementations, the second application interface is corresponding to a second layer set, the second layer set may include a decorative layer, a background layer, and a second application layer, and the second application layer is used to display display content corresponding to the second operation instruction.

In some other possible implementations, the method may further include:
if the motion track does not meet the preset condition, clearing the target layer, and determining a display parameter of the second layer set based on the configuration information of the target application;
generating the background layer and the second application layer based on the display parameter of the second layer set in response to the second operation instruction;
adjusting the transparency of the decorative layer to corresponding display transparency based on the display parameter of the second layer set;
generating the second application interface based on the background layer, the second application layer, and the decorative layer; and
displaying the second application interface on the outer screen.

For a procedure in which the electronic device 100 determines the display parameter of the second layer set based on the configuration information of the target application, refer to step S203 and content of related embodiments thereof. Details are not described herein again in this application.

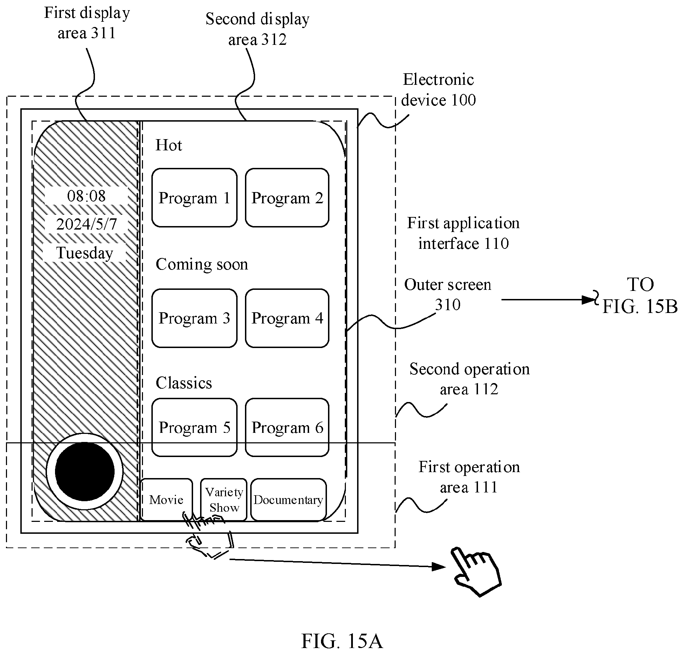

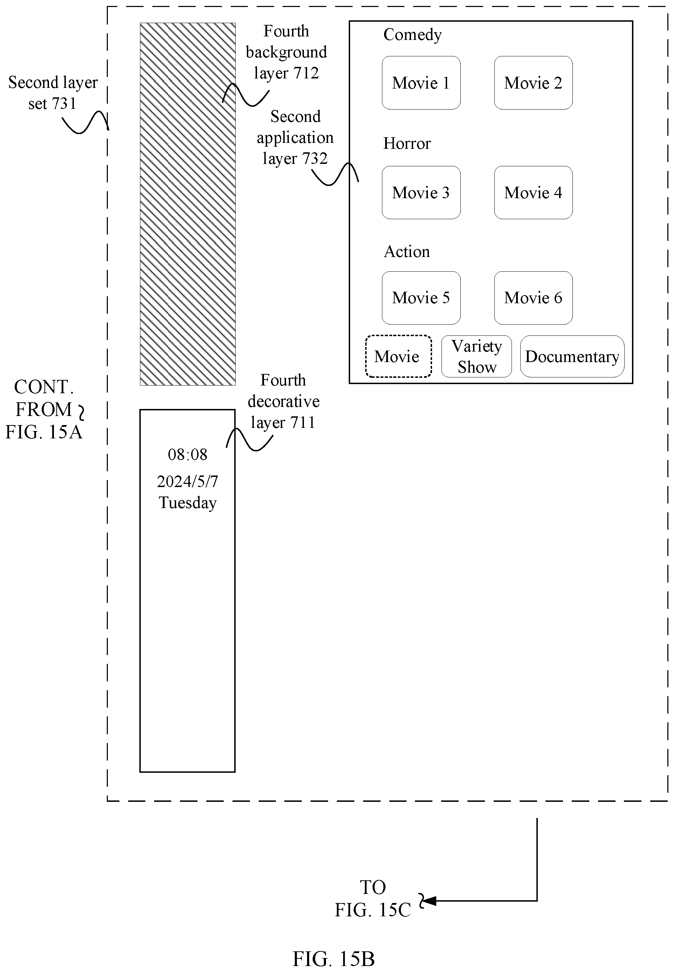

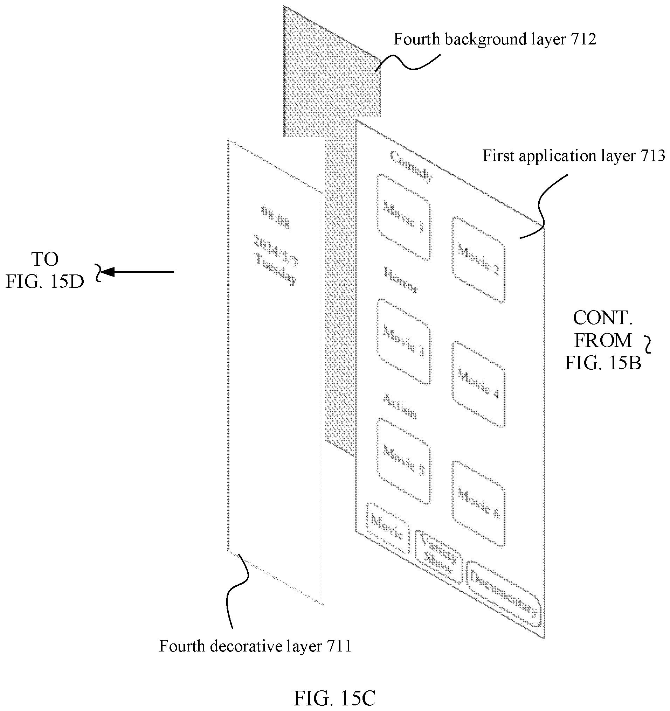

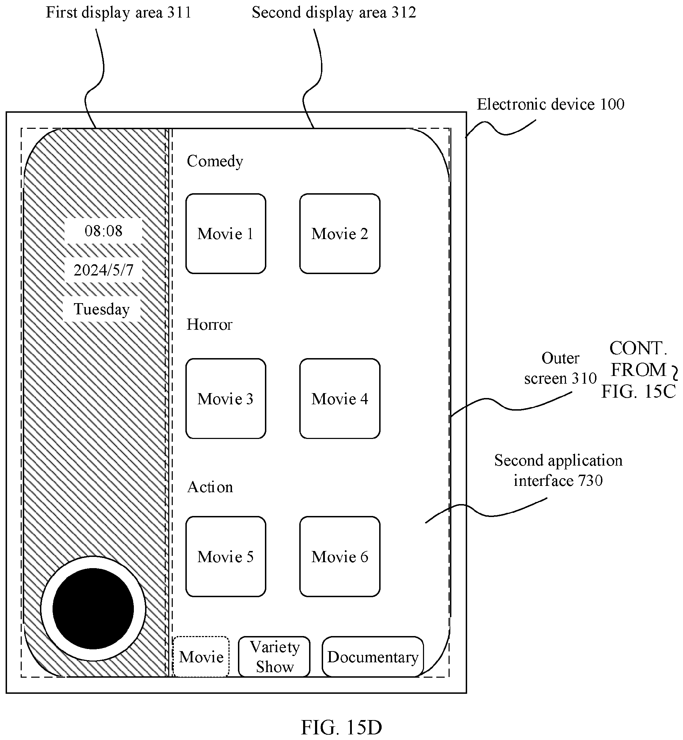

For example, this application describes, with reference to FIG. 14A(1) to FIG. 14A(3), FIG. 14B(1) to FIG. 14B(3), and FIG. 15A to FIG. 15D, a procedure and an animation effect that are corresponding to generating and displaying the second application interface by the electronic device 100. FIG. 15A to FIG. 15D are a schematic diagram of a scenario of another interface display according to an embodiment of this application. As shown in FIG. 14A(1) to FIG. 14A(3), when the user uses a "video" application program (which may be understood as the foregoing target application), the electronic device 100 may present a first application interface 110 (which may be understood as a home page interface of the "video" application program) to the user on the outer screen 310. The first application interface 110 correspondingly includes a first layer set 710, and the first layer set 710 includes a fourth decorative layer 711, a fourth background layer 712, and a first application layer 713. The fourth decorative layer 711 and the fourth background layer 712 are displayed in a first display area 311 of the first application interface 110, the first application layer 713 is displayed in a second display area 312 of the first application interface 110, and a display level of the fourth decorative layer 711 is higher than display levels of the fourth background layer 712 and the first application layer 713.

Further, as shown in FIG. 14B(1) to FIG. 14B(3), in response to tapping a "movie" control in the first operation area 111 of the outer screen 310 by the user, when a finger of the user touches the "movie" control, the electronic device 100 determines the home screen of the outer screen as the foreground application, and generates a target layer 721 corresponding to the home screen of the outer screen. In this case, a display level of the target layer 721 is lower than the display levels of the fourth background layer 712 and the first application layer 713, and the user cannot view display content corresponding to the target layer 721 on the outer screen 310. Consequently, the user can still view only display content corresponding to the first application interface 110 at this time.

Furthermore, as shown in FIG. 15A to FIG. 15D, in response to the finger of the user leaving the "movie" control (which may be understood as that the second operation instruction of the user is to tap the "movie" control, and a motion track corresponding to the second operation instruction has only one point), it may be considered that an operation intention of the user is to "view various video content under a movie category". In this case, the display content corresponding to the target layer 721 (which may be understood as the display content corresponding to the home screen of the outer screen) does not need to be displayed for the user. In this case, the target layer 721 may be cleared, and a second application interface 730 corresponding to the operation instruction may be presented to the user on the outer screen 310.

Specifically, the electronic device 100 may determine, based on the configuration information of the "video" application program (which may be understood as the foregoing target application), a second layer set 731 corresponding to the second application interface 730. The second layer set 731 may include the fourth decorative layer 711, the fourth background layer 712, and a second application layer 732.

In some other possible implementations, before the home screen is displayed on the outer screen, the electronic device 100 may display a first transition picture on the outer screen. The first transition picture may include the background layer and display content corresponding to the first application layer. In a process in which the electronic device 100 presents the home screen to the user, the first transition picture covers the home screen, and an animation effect in which the first transition picture gradually shrinks and the home screen gradually completely displays is presented. An initial size of the first transition picture is the same as the size of the outer screen.

In some other possible implementations, before the second application interface is displayed on the outer screen, the electronic device 100 may display a second transition picture on the outer screen. The second transition picture may include the background layer and display content corresponding to the second application layer. It should be noted that if a playback area of an animation effect corresponding to the operation instruction is the second display area, the second transition picture includes only the display content corresponding to the second application layer. If a playback area of an animation effect corresponding to the operation instruction is the entire outer screen, the second transition picture includes the background layer and the display content corresponding to the second application layer.

Specifically, if the playback area of the animation effect corresponding to the operation instruction is the second display area, in a process in which the electronic device 100 presents the second application interface to the user, the second transition picture gradually covers the second display area of the first application interface. In this case, a final size of the second transition picture is the same as a size of the second display area. When the second transition picture completely covers the second display area of the first application interface, the electronic device 100 presents the second application interface to the user on the outer screen. If the playback area of the animation effect corresponding to the operation instruction is the entire outer screen, in a process in which the electronic device 100 presents the second application interface to the user, the second transition picture gradually covers the first application interface. In this case, a final size of the second transition picture is the same as the size of the outer screen. When the second transition picture completely covers the first application interface, the electronic device 100 presents the second application interface to the user on the outer screen.

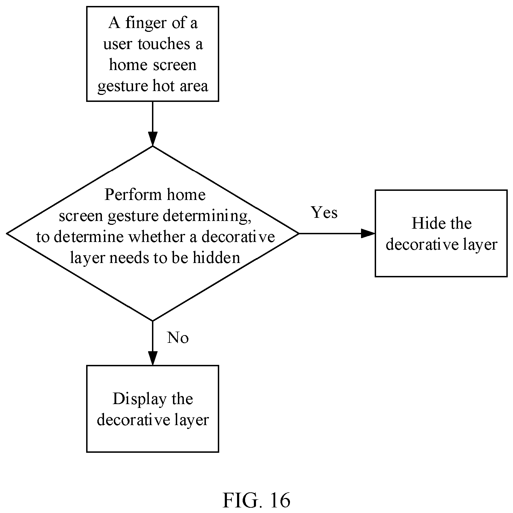

Referring to FIG. 16, FIG. 16 is a schematic flowchart of another method for displaying an interface based on an operation gesture according to an embodiment of this application.

As shown in FIG. 16, when the user uses a function related to the target application by using the electronic device 100, if the finger of the user touches a home screen gesture hot area (which may be understood as the foregoing first operation area) of the electronic device 100, it may be determined, based on a preset gesture library of the system about home screen operation gestures, whether a gesture corresponding to the operation instruction of the user is the home screen operation gesture, to determine whether the decorative layer needs to be hidden. In a case in which the decorative layer is currently displayed on the outer screen, if the gesture corresponding to the operation instruction of the user is the home screen operation gesture, the decorative layer needs to be hidden. If the gesture corresponding to the operation instruction of the user is not the home screen operation gesture, the decorative layer continues to be displayed.

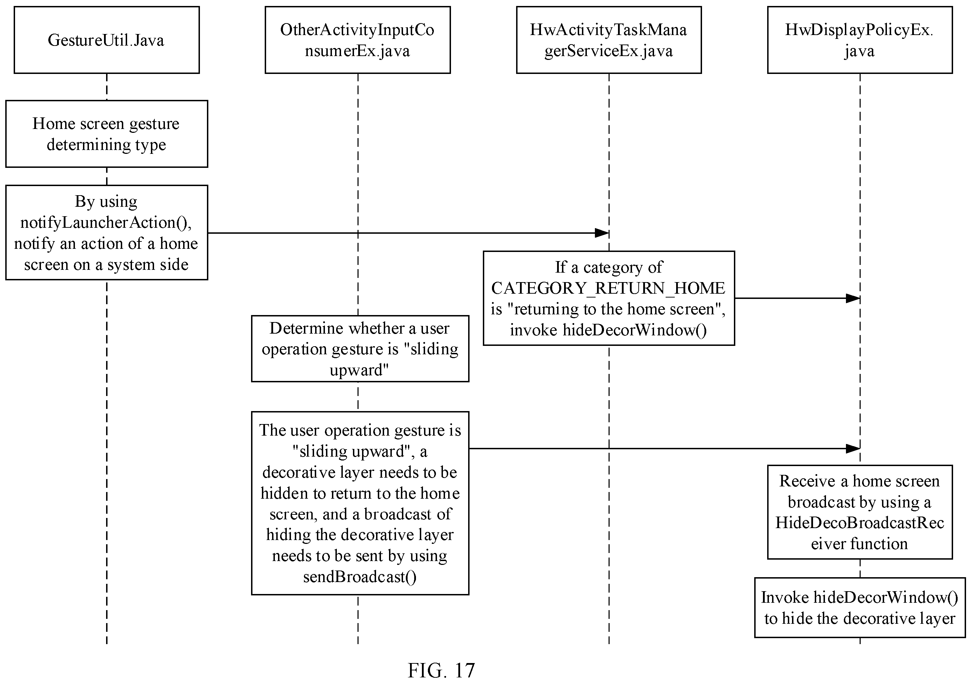

Referring to FIG. 17, FIG. 17 is a schematic flowchart of still another method for displaying an interface based on an operation gesture according to an embodiment of this application.

As shown in FIG. 17, in some possible implementations, after receiving the operation instruction of the user, the electronic device 100 may determine, by using a home screen gesture determining module GestureUtil.Java, whether a gesture corresponding to the operation instruction of the user is a home screen operation gesture (which may be understood as whether a hand of the user touches a return key in the first operation area). When the gesture corresponding to the operation instruction of the user is the home screen operation gesture (which may be understood as that the hand of the user touches the return key in the first operation area), GestureUtil.Java may send an activation instruction to a home screen management module HwActivityTaskManagerServiceEx.java of the outer screen by using a notification function notifyLauncherAction().

Further, when a category of a CATEGORY_RETURN_HOME function is "returning to the home screen", HwActivityTaskManagerServiceEx.java invokes the hideDecorWindow() to convey, to HwDisplayPolicyEx.java, an instruction of hiding the decorative layer, thereby achieving a purpose of hiding the decorative layer.

In some other possible implementations, after receiving the operation instruction of the user, the electronic device 100 may determine, by using another activation input module OtherActivityInputConsumerEx.java, whether a gesture corresponding to the operation instruction of the user is an upward-sliding gesture starting from the first operation area. If the gesture is the upward-sliding gesture starting from the first operation area, it may be determined that an operation intention of the user is to "display the home screen", and in this case, the decorative layer needs to be hidden. OtherActivityInputConsumerEx.java may notify, in a manner of home screen broadcast sendBroadcast(), of HwDisplayPolicyEx.java to hide the decorative layer. Specifically, HwDisplayPolicyEx.java may receive the home screen broadcast by using a HideDecoBroadcastReceiver function, and may invoke hideDecorWindow() to achieve a purpose of hiding the decorative layer.

In conclusion, according to the method in this embodiment of this application, a real operation intention of the user can be confirmed based on the motion track of the operation instruction, to determine the foreground application of the electronic device, and further correctly present a corresponding function interface to the user, thereby effectively improving user experience. Specifically, the first operation area exists on the outer screen of the electronic device. When the electronic device receives the operation instruction applied to the first application interface, if the start point of the motion track corresponding to the operation instruction is in the first operation area, the target layer may be generated, and the display level of the target layer is set to be lower than the display level of each layer in the first layer set, so that the target layer is not perceived by the user. Further, if the motion track corresponding to the operation instruction meets the preset condition, it may be considered that an intention of the operation instruction of the user is to return to the home screen of the outer screen, so that the home screen can be displayed on the outer screen based on the target layer. If the motion track corresponding to the operation instruction does not meet the preset condition, it may be considered that the intention of the operation instruction of the user is to use a related function of the target application, so that the target layer can be cleared, and the second application interface corresponding to the operation instruction can be displayed on the outer screen.

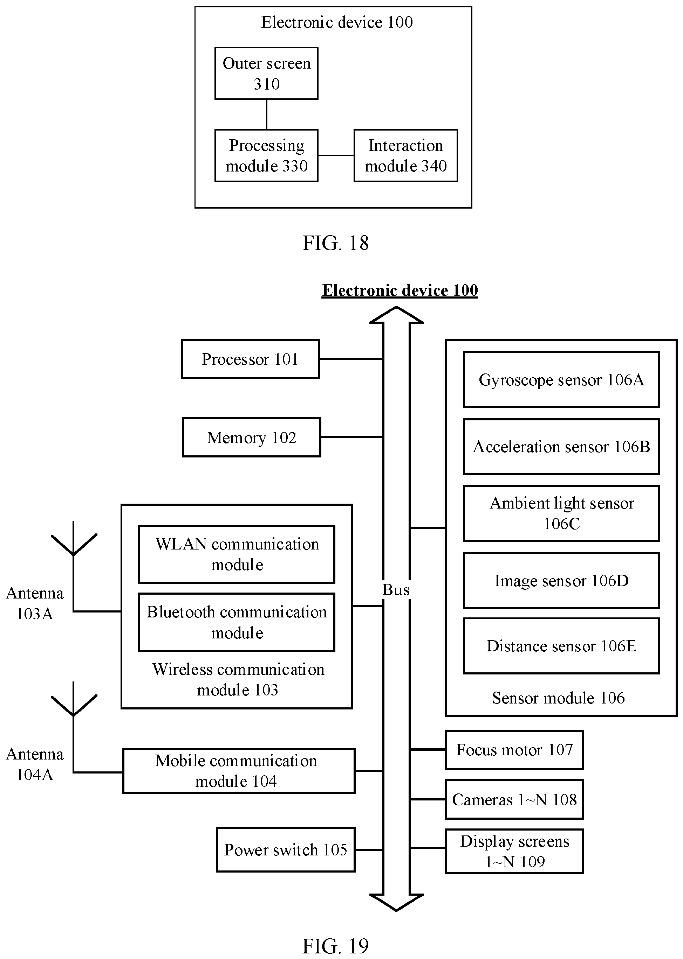

Referring to FIG. 18, FIG. 18 is a schematic diagram of composition of an electronic device according to an embodiment of this application.

As shown in FIG. 18, the electronic device 100 includes an outer screen 310, a processing module 330, and an interaction module 340, and a camera is disposed on the outer screen 310.

The outer screen 310 may be configured to display a first interface, where the first interface may include a target control of a target application.

The outer screen 310 may be further configured to receive a first operation instruction applied to the target control.

The processing module 330 may be configured to determine a display parameter of a layer set corresponding to the first operation instruction based on configuration information of the target application, where the layer set may include a background layer, an application layer, and a decorative layer, and the application layer includes display content corresponding to the first operation instruction.

The processing module 330 may be further configured to display a second interface on the outer screen 310 based on the display parameter in response to the first operation instruction, where the second interface may include a first display area and a second display area, the camera is located in the first display area and outside the second display area, the application layer is displayed in the second display area, and the decorative layer and the background layer are displayed in the first display area.

In some possible embodiments, the configuration information of the target application may include display parameters corresponding to a plurality of application interfaces of the target application.

The electronic device 100 may further include:

The processing module 330 may be further configured to determine a target interface based on the first operation instruction, where the target interface is an interface of the target application in response to the first operation instruction; and
determine a display parameter corresponding to the target interface from the display parameters corresponding to the plurality of application interfaces.

In some other possible embodiments, the display parameters corresponding to the plurality of application interfaces may include sizes, display levels, and display content of a background layer and an application layer in a corresponding application interface, and display transparency of a decorative layer.

In some other possible embodiments, a display level of the decorative layer is higher than the display levels of the background layer and the application layer; and
if the display level of the application layer is the same as the display level of the background layer, the size of the background layer is the same as a size of the first display area; or
if the display level of the application layer is higher than the display level of the background layer, the size of the background layer is greater than or equal to a size of the first display area.

In some other possible embodiments, the electronic device 100 may further include:
The outer screen 310 may be further configured to display a transition interface, where the transition interface may include the background layer, the application layer, and the decorative layer whose transparency is target transparency, and the target transparency is determined based on a playback area of an animation effect corresponding to the first operation instruction.

In some other possible embodiments, the electronic device 100 may further include:
The processing module 330 may be further configured to: if the playback area of the animation effect corresponding to the first operation instruction is the second display area, determine the target transparency as first transparency, where the first transparency is transparency corresponding to the decorative layer in the first interface; or
the processing module 330 may be further configured to: if the playback area of the animation effect corresponding to the first operation instruction is the entire outer screen 310, determine the target transparency as second transparency, where the second transparency is corresponding transparency when the decorative layer is hidden.

In some other possible embodiments, the electronic device 100 may further include an interaction module 340.

The interaction module 340 may be configured to receive a power-on instruction for the electronic device.

The processing module 330 may be further configured to generate the decorative layer based on preset information in response to the power-on instruction, where the preset information may include a size of the decorative layer, display content corresponding to the decorative layer, and initial transparency of the decorative layer, and the initial transparency is the second transparency.

In some other possible embodiments, the electronic device 100 may further include:
The processing module 330 may be further configured to generate the background layer and the application layer based on the display parameter in response to the first operation instruction.

The processing module 330 may be further configured to adjust the initial transparency of the decorative layer to the display transparency based on the display parameter.

The processing module 330 may be further configured to generate the second interface based on the background layer, the application layer, and the decorative layer.

In some other possible embodiments, the electronic device 100 may further include:
The processing module 330 may be further configured to obtain an information description file corresponding to the target application when downloading of the target application is complete in the electronic device, or when the target application runs to a target node.

The processing module 330 may be further configured to determine the configuration information of the target application based on the information description file.

In some other possible embodiments, the outer screen includes a first operation area, and the electronic device 100 may further include:
The outer screen 310 may be further configured to display a first application interface of the target application, where the first application interface is one of the plurality of application interfaces corresponding to the target application, and the first application interface is corresponding to a first layer set.

The interaction module 340 may be further configured to receive a second operation instruction applied to the first application interface.

The processing module 330 may be further configured to generate a target layer when a start point of a motion track of the second operation instruction is in the first operation area, where the target layer is a display layer corresponding to a home screen of the outer screen 310, and a display level of the target layer is lower than a display level of each layer in the first layer set.

The outer screen 310 may be further configured to display the home screen on the outer screen 310 based on the target layer in a case in which the motion track meets a preset condition.

The processing module 330 may be further configured to clear the target layer in a case in which the motion track does not meet the preset condition.

The outer screen 310 may be further configured to display a second application interface corresponding to the second operation instruction in a case in which the motion track does not meet the preset condition.

In some other possible embodiments, the outer screen 310 further includes a second operation area, the first operation area is located at a bottom of the outer screen 310, and the second operation area is located at a top of the outer screen 310.

The preset condition is that a touch point corresponding to a motion track slides upward from the first operation area to a center location of the second operation area.

In some other possible embodiments, the electronic device may further include:
The processing module 330 may be further configured to: in a case in which the motion track meets the preset condition, display the home screen on the outer screen 310 based on the decorative layer and the target layer, where transparency of the decorative layer is the second transparency, the second transparency is the corresponding transparency when the decorative layer is hidden, and a size of the target layer is the same as a size of the outer screen 310.

In some other possible embodiments, the second application interface is corresponding to a second layer set, the second layer set may include the decorative layer, the background layer, and a second application layer, and the second application layer is configured to display display content corresponding to the operation instruction.

The electronic device may further include:
The processing module 330 may be further configured to: in a case in which the motion track does not meet the preset condition, clear the target layer, and determine a display parameter of the second layer set based on the configuration information of the target application.

The processing module 330 may be further configured to generate the background layer and the second application layer based on the display parameter of the second layer set in response to the second operation instruction.

The processing module 330 may be further configured to adjust the transparency of the decorative layer to corresponding display transparency based on the display parameter of the second layer set.

The processing module 330 may be further configured to generate the second application interface based on the background layer, the second application layer, and the decorative layer.

The outer screen 310 may be further configured to display the second application interface.

Further, referring to FIG. 19, FIG. 19 is a schematic diagram of a hardware structure of an electronic device according to an embodiment of this application.

The electronic device 100 may include a processor 101, a memory 102, a wireless communication module 103, a mobile communication module 104, an antenna 103A, an antenna 104A, a power switch 105, a sensor module 106, a focus motor 107, a camera 108, a display screen 109, and the like. The sensor module 106 may include a gyroscope sensor 106A, an acceleration sensor 106B, an ambient light sensor 106C, an image sensor 106D, a distance sensor 106E, and the like. The wireless communication module 103 may include a WLAN communication module, a Bluetooth communication module, and the like. The plurality of parts may transmit data by using a bus.

The processor 101 may include one or more processing units. For example, the processor 101 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The memory 102 may be configured to store computer executable program code, and the executable program code may include instructions. The processor 101 runs the instructions stored in the memory 102, to perform various function applications and data processing of the electronic device 100. The memory 102 may include a program storage area and a data storage area. In a specific implementation, the memory 102 may include a high-speed random access memory, and may also include a nonvolatile memory, for example, one or more magnetic disk storage devices, a flash memory device, or another nonvolatile solid-state storage device.

A wireless communication function of the electronic device 100 may be implemented by using the antenna 103A, the antenna 104A, the mobile communication module 104, the wireless communication module 103, the modem processor, the baseband processor, and the like.

The antenna 103A and the antenna 104A may be configured to transmit or receive an electromagnetic wave signal. Each antenna in the electronic device 100 may be configured to cover one or more communication frequency bands. Different antennas may be further multiplexed to improve antenna utilization.

The mobile communication module 104 may provide a solution for wireless communication including 2G/3G/4G/5G and the like applied to the electronic device 100.

The wireless communication module 103 may provide a solution applied to the electronic device 100 for wireless communication including a wireless local area network (wireless local area networks, WLAN), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like.

The gyroscope sensor 106A may be configured to determine a motion posture of the electronic device 100.

The acceleration sensor 106B may detect magnitudes of acceleration in various directions (usually on three axes) of the electronic device 100.

The electronic device 100 may implement a photographing function by using the ISP, the camera 108, the video codec, the GPU, the display screen 109, the application processor, and the like.

The electronic device 100 may implement a display function by using the GPU, the display screen 109, the application processor, and the like. The GPU is a microprocessor for image processing and connects the display screen 109 and the application processor. The GPU is configured to perform mathematical and geometric computing for graphics rendering. The processor 101 may include one or more GPUs, and the one or more GPUs execute program instructions to generate or change display information.

The display screen 109 is configured to display an image and a video. The display screen 109 includes a display panel. In some embodiments, the electronic device 100 may include 1 or N display screens 109, where N is a positive integer greater than 1.

The structure illustrated in this embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

In this embodiment of this application:
Any one or more of the wireless communication module 103, the mobile communication module 104, the sensor module 106, the focus motor 107, the camera 108, and the like may be used to detect a current environment feature of the electronic device 100.

The display screen 109 is configured to display a user interface, such as a photographing interface or an album interface, provided by the foregoing electronic device 100. For the user interface displayed on the display screen 109, refer to the foregoing UI embodiment.

For an operation performed by each component in the electronic device 100, refer to related descriptions in the foregoing method embodiments.

A software system of the electronic device 100 may use a layered architecture, an event-driven architecture, a microkernel architecture, a microservice architecture, or a cloud architecture. In this embodiment of this application, a mobile operating system with a layered architecture is used as an example to describe a software structure of the electronic device 100.

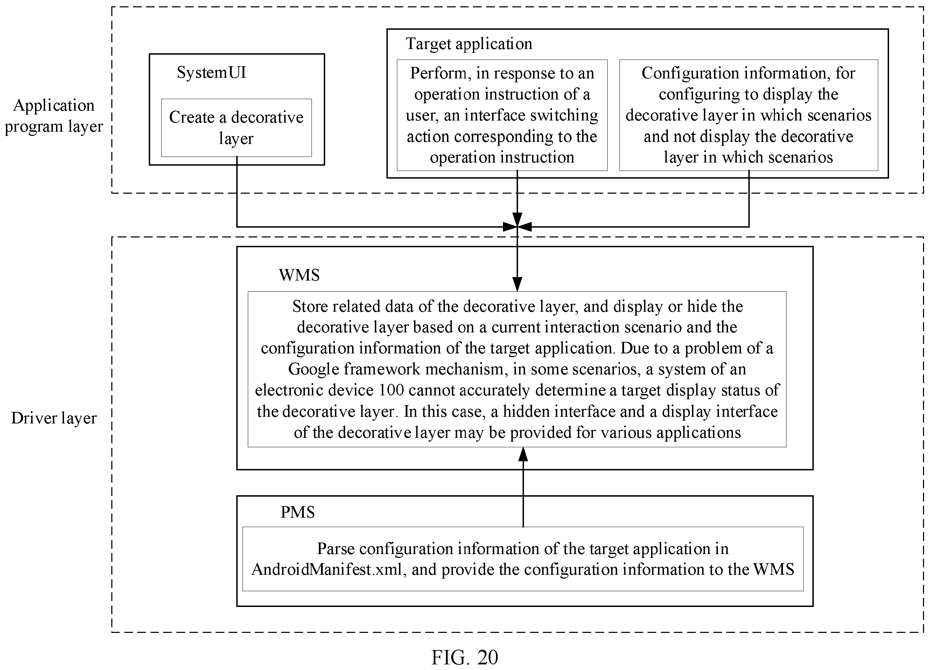

It may be understood that the software system of the electronic device 100 may use the layered architecture, the event-driven architecture, the microkernel architecture, the microservice architecture, or the cloud architecture. This is not limited in this application. For ease of understanding, for example, referring to FIG. 20, FIG. 20 is a block diagram of a software structure according to an embodiment of this application. In a layered architecture as shown in FIG. 20, software is divided into several layers. Each layer has a clear role and function. Layers may communicate with each other through a software interface.

In some embodiments, the system of the electronic device 100 may be divided into two layers: an application program layer and a driver layer from top to bottom. The application program layer may include a SystemUI and a target application. The driver layer may include a window manager service (Window Manager Service, WMS) module and a package manager service (Package Manager Service, PMS) module. Specifically, a SystemUI application may be used to create a decorative layer. The target application may be used to execute, in response to an operation instruction of a user, an interface switching action corresponding to the operation instruction. The target application may further include configuration information, to specify display status requirements of different operation scenarios or application interfaces for the decorative layer. For example, the target application may be configured to display the decorative layer in which scenarios and not display the decorative layer in which scenarios.

Further, the WMS may be configured to store related data of the decorative layer, and display or hide the decorative layer based on a current interaction scenario and the configuration information of the target application. Due to a problem of a Google framework mechanism, in some scenarios, the system of the electronic device 100 cannot accurately determine a target display status of the decorative layer. In this case, a hidden interface and a display interface of the decorative layer may be provided for various applications, so that the various applications adjust a display status of the decorative layer by themselves.

Furthermore, the PMS may parse the configuration information of the target application in AndroidManifest.xml, and provide the configuration information to the WMS.

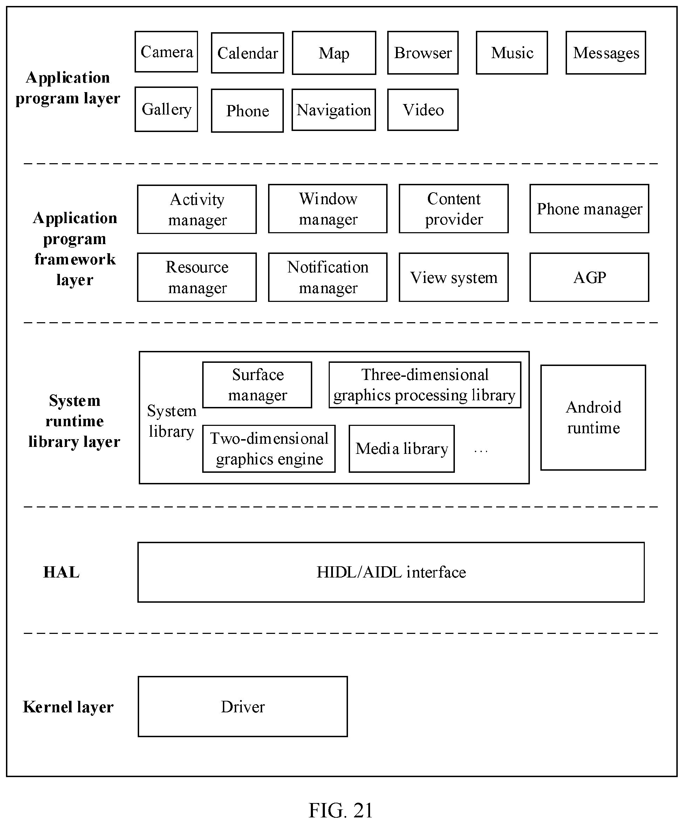

Further, referring to FIG. 21, FIG. 21 is a block diagram of another software structure according to an embodiment of this application. In a layered architecture as shown in FIG. 21, software is divided into several layers. Each layer has a clear role and function. Layers may communicate with each other through a software interface.

In some embodiments, the system of the electronic device 100 may be divided into five layers: an application program layer, an application program framework layer, a system runtime library layer, a hardware abstraction layer (hardware abstraction layer, HAL), and a kernel layer from top to bottom. The foregoing layers are described as follows:
The application program layer may include a series of application packages. For example, the application package at the application program layer may include application programs such as Camera, Gallery, Calendar, Phone, Map, Navigation, Browser, Video, Music, and Messages.

The application program framework layer may provide an application programming interface (application programming interface, API) and a programming framework for the application programs at the application program layer. The application program framework layer may include some predefined functions.

For example, the application program framework layer may include an activity manager (activity manager), a window manager (window manager), a content provider (content provider), a view system (view system), a phone manager (telephony manager), a resource manager (resource manager), a notification manager (notification manager), an accelerated graphics port (accelerated graphics port, AGP), and the like.

The activity manager may be configured to manage a lifecycle of each application program and a common navigation rollback function.

The window manager may be configured to manage a window program. For example, the window manager may obtain a size of a display screen of the electronic device 100, lock a screen, take a screenshot, determine whether there is a status bar, and so on.

The content provider may be configured to store and obtain data, so that the data can be accessed by an application program, and the data can be accessed or shared between different application programs. For example, the data may include a video, an image, audio, calls made and answered, a browsing history and a bookmark, an address book, and the like.

The view system includes visual controls such as a text display control and a picture display control. The view system may be configured to build an application program. A display interface may include one or more views. For example, a display interface including an SMS message notification icon may include a view for displaying a text and a view for displaying a picture.

The phone manager is configured to provide a communication function of the electronic device 100, such as call status management (including answering a call, hanging up a call, or the like).

The resource manager provides various resources such as a localized character string, an icon, a picture, a layout file, and a video file for an application program.

The notification manager enables an application program to display notification information in the status bar, and the notification information may be used to convey a notification-type message and may automatically disappear after a short stay without requiring user interaction. For example, the notification manager may be configured to provide a notification of download completion, a message reminder, and the like. The notification manager may alternatively be a notification that appears in the status bar at a top of a system in a form of a graph or scroll bar text, for example, a notification of an application program running in the background, or a notification that appears on a display screen in a form of a dialog window. For example, text information is prompted in the status bar, an alert sound is made, the electronic device vibrates, or an indicator light blinks.

The AGP in the application program framework layer may be used to improve rendering performance of a graphics card, for example, providing more cache capacity to the graphics card to achieve a faster image processing speed.

The system runtime library layer includes a system library and Android runtime (Android Runtime).

The Android runtime includes a kernel library and a virtual machine. The Android runtime is responsible for scheduling and management of an Android system. The kernel library includes two parts: One part is a functional function that needs to be invoked by a java language, and the other part is a kernel library of Android. The application program layer and the application program framework layer run on the virtual machine. The virtual machine executes java files of the application program layer and the application program framework layer as binary files. The virtual machine is configured to perform functions such as object lifecycle management, stack management, thread management, security and exception management, and garbage collection.

The system library may be understood as a support of an application program framework, and is an important link between the application program framework layer and the kernel layer. The system layer may include a plurality of functional modules, for example, may include a surface manager (surface manager), a media library (media libraries), a three-dimensional graphics processing library (for example, OpenGL ES), and a two-dimensional graphics engine (for example, SGL).

The surface manager may be configured to manage a display subsystem, for example, in a case in which the electronic device 100 executes a plurality of application programs, be responsible for managing interaction between display and an access operation. The surface manager may be further configured to provide fusion of two-dimensional and three-dimensional layers for a plurality of application programs.

The media library may support playback and recording in a plurality of common audio and video formats, a still image file, and the like. The media library may support a plurality of audio and video coding formats, for example, which may be MPEG4, H.264, MP3, AAC, AMR, JPG, PNG, and the like.

The three-dimensional graphics processing library is configured to implement three-dimensional graphics drawing, image rendering and composition, layer processing, and the like.

The two-dimensional graphics engine may be understood as a drawing engine for two-dimensional drawings.

The hardware abstraction layer provides a standard interface, for example, an HAL interface definition language (HAL interface definition language, HIDL) interface or an Android interface definition language (android interface definition language, AIDL) interface.

The kernel layer may be understood as an abstraction layer between hardware and software. The kernel layer may include system services such as security, memory management, process management, power management, network protocol management, and drive management. For example, the kernel layer may include drivers, for example, may include a display driver, a camera driver, an audio driver, and a sensor driver. Optionally, the kernel layer may alternatively be referred to as an Android kernel or a kernel program. For example, a hardware layer of the electronic device 100 may include a touch panel (touch panel, TP), a liquid crystal display (liquid crystal display, LCD), and the like.

In some embodiments, the kernel layer may be understood as a kernel mode, and the other four layers (namely, the application program layer, the application program framework layer, the system runtime library layer, and the HAL) may be understood as user modes.

It may be understood that a plurality of applications that may exist at the application program layer have video recording and/or playback functions. For example, Camera has a video recording function, and applications such as Gallery, Navigation, and Browser may have a video playback function. Further, different duration, resolution, photographing parameters, and the like of videos affect video recording and/or playback. The photographing parameters may be an aperture value, a shutter speed, a sensitivity, an exposure, a focal length, a depth of field, and the like.

For example, related parameters of video recording and/or playback supported by various applications may be stored in a sensor binary file (sensor bin), and this sensor bin file may be stored in an external memory, such as a magnetic disk or a hard disk. When a user performs video recording and/or playback by using a specific application, the application may read a related parameter of video recording and/or playback into a memory, so that the user can normally use the application, thereby ensuring user experience.

It should be understood that the steps of the foregoing method embodiments may be completed by using a hardware integrated logic circuit in the processor or by using instructions in a software form. The steps of the method disclosed with reference to the embodiments of this application may be directly performed by a hardware processor, or by a combination of hardware in the processor and a software module.

This application further provides an electronic device, and the electronic device may include a memory and a processor. The memory may be configured to store a computer program, and the processor may be configured to invoke the computer program in the memory to enable the electronic device to perform the method performed on the electronic device side in any one of the foregoing embodiments.

This application further provides a chip system. The chip system includes at least one processor configured to implement the functions involved in the electronic device side in any one of the foregoing embodiments.

In some possible designs, the chip system further includes a memory. The memory is configured to store program instructions and data. The memory is located inside the processor or outside the processor.

The chip system may include a chip, or may include a chip and another discrete device.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may alternatively include one or more memories. The memory may be integrated with the processor, or may be separated from the processor. This is not limited in embodiments of this application. For example, the memory may be a non-transitory memory such as a read-only memory ROM, and the memory and the processor may be integrated on a same chip, or may be respectively arranged on different chips. A type of the memory and a manner of disposing the memory and the processor are not specifically limited in embodiments of this application.

For example, the chip system may be a field programmable gate array (field programmable gate array, FPGA), an application specific integrated circuit (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

This application further provides a computer program product, and the computer program product includes a computer program (which may also be referred to as code or an instruction). When the computer program is run, a computer is enabled to perform the method performed by the electronic device side in any one of the foregoing embodiments.

This application further provides a computer-readable storage medium. The computer-readable storage medium stores a computer program (which may also be referred to as code or an instruction). When the computer program is run, a computer is enabled to perform the method performed by the electronic device side in any one of the foregoing embodiments.

As used in the foregoing embodiments, based on the context, the term "when ..." may be interpreted as a meaning of "if ...", "after ...", "in response to determining ...", or "in response to detecting ...". Similarly, based on the context, the phrase "when determining ..." or "if detecting (a stated condition or event)" may be interpreted as a meaning of "if determining ...", "in response to determining ...", "when detecting (a stated condition or event)", or "in response to detecting ... (a stated condition or event)".

The various implementations of this application may be arbitrarily combined to achieve different technical effects.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The available medium may be a magnetic medium (such as a floppy disk, a hard disk, or a magnetic tape), an optical medium (such as a DVD), a semiconductor medium (such as a solid state disk (solid state disk, SSD)), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

In conclusion, the foregoing descriptions are merely embodiments of the technical solutions of this application, and are not intended to limit the protection scope of this application. Any modification, equivalent replacement, and improvement made in accordance with the disclosure of this application shall be included in the protection scope of this application.

## Claims

1. A method for displaying an application interface, applied to an electronic device, wherein the electronic device comprises an outer screen, a camera is disposed on the outer screen, and the method comprises:
displaying a first interface on the outer screen, wherein the first interface comprises a target control of a target application;
receiving a first operation instruction applied to the target control;
determining a display parameter of a layer set corresponding to the first operation instruction based on configuration information of the target application, wherein the layer set comprises a background layer, an application layer, and a decorative layer, and the application layer comprises display content corresponding to the first operation instruction; and
displaying a second interface on the outer screen based on the display parameter in response to the first operation instruction, wherein the second interface comprises a first display area and a second display area, the camera is located in the first display area and outside the second display area, the application layer is displayed in the second display area, and the decorative layer and the background layer are displayed in the first display area.

2. The method according to claim 1, wherein the configuration information of the target application comprises display parameters respectively corresponding to a plurality of application interfaces of the target application; and
the determining a display parameter of a layer set corresponding to the first operation instruction based on configuration information of the target application comprises:
determining a target interface based on the first operation instruction, wherein the target interface is an original interface of the target application in response to the first operation instruction; and
determining a display parameter corresponding to the target interface from the display parameters respectively corresponding to the plurality of application interfaces.

3. The method according to claim 2, wherein the display parameters respectively corresponding to the plurality of application interfaces comprise sizes, display levels, and display content of a background layer and an application layer in a corresponding application interface, and display transparency of a decorative layer.

4. The method according to claim 3, wherein a display level of the decorative layer is higher than the display levels of the background layer and the application layer; and
if the display level of the application layer is the same as the display level of the background layer, the size of the background layer is the same as a size of the first display area; or
if the display level of the application layer is higher than the display level of the background layer, the size of the background layer is greater than or equal to a size of the first display area.

5. The method according to any one of claims 1-4, wherein before the displaying the second interface on the outer screen, the method further comprises:
displaying a transition interface on the outer screen, wherein the transition interface comprises the background layer, the application layer, and the decorative layer whose transparency is target transparency, and the target transparency is determined based on a playback area of an animation effect corresponding to the first operation instruction.

6. The method according to claim 5, wherein the method further comprises:
if the playback area of the animation effect corresponding to the first operation instruction is the second display area, determining the target transparency as first transparency, wherein the first transparency is transparency corresponding to the decorative layer in the first interface; or
if the playback area of the animation effect corresponding to the first operation instruction is the entire outer screen, determining the target transparency as second transparency, wherein the second transparency is corresponding transparency when the decorative layer is hidden.

7. The method according to claim 6, wherein the method further comprises:
receiving a power-on instruction for the electronic device; and
generating the decorative layer based on preset information in response to the power-on instruction, wherein the preset information comprises a size of the decorative layer, display content corresponding to the decorative layer, and initial transparency of the decorative layer, and the initial transparency is the second transparency.

8. The method according to claim 7, wherein the displaying a second interface on the outer screen based on the display parameter in response to the first operation instruction comprises:
generating the background layer and the application layer based on the display parameter in response to the first operation instruction;
adjusting the initial transparency of the decorative layer to the display transparency based on the display parameter;
generating the second interface based on the background layer, the application layer, and the decorative layer; and
displaying the second interface on the outer screen.

9. The method according to claim 8, wherein the method further comprises:
obtaining an information description file corresponding to the target application when downloading of the target application is complete in the electronic device, or when the target application runs to a target node; and
determining the configuration information of the target application based on the information description file.

10. The method according to any one of claims 1-9, wherein the outer screen comprises a first operation area, and the method further comprises:
displaying a first application interface of the target application on the outer screen, wherein the first application interface is one of the plurality of application interfaces corresponding to the target application, and the first application interface is corresponding to a first layer set;
receiving a second operation instruction applied to the first application interface;
generating a target layer when a start point of a motion track of the second operation instruction is in the first operation area, wherein the target layer is a display layer corresponding to a home screen of the outer screen, and a display level of the target layer is lower than a display level of each layer in the first layer set; and
displaying the home screen on the outer screen based on the target layer if the motion track meets a preset condition; or
if the motion track does not meet the preset condition, clearing the target layer, and displaying a second application interface corresponding to the second operation instruction on the outer screen.

11. The method according to claim 10, wherein the outer screen further comprises a second operation area, the first operation area is located at a bottom of the outer screen, and the second operation area is located at a top of the outer screen; and
the preset condition is that a touch point corresponding to a motion track slides upward from the first operation area to a center location of the second operation area.

12. The method according to claim 11, wherein the method further comprises:
if the motion track meets the preset condition, displaying the home screen on the outer screen based on the decorative layer and the target layer, wherein transparency of the decorative layer is the second transparency, the second transparency is the corresponding transparency when the decorative layer is hidden, and a size of the target layer is the same as a size of the outer screen.

13. The method according to claim 12, wherein the second application interface is corresponding to a second layer set, the second layer set comprises the decorative layer, the background layer, and a second application layer, and the second application layer is configured to display display content corresponding to the operation instruction; and
the method further comprises:
if the motion track does not meet the preset condition, clearing the target layer, and determining a display parameter of the second layer set based on the configuration information of the target application, wherein the display parameter of the second layer set comprises sizes, display levels, and display content of the background layer and the second application layer, and display transparency of the decorative layer;
generating the background layer and the second application layer based on the display parameter of the second layer set in response to the second operation instruction;
adjusting the transparency of the decorative layer to corresponding display transparency based on the display parameter of the second layer set;
generating the second application interface based on the background layer, the second application layer, and the decorative layer; and
displaying the second application interface on the outer screen.

14. An electronic device, wherein the electronic device comprises an outer screen and a processing module, and a camera is disposed on the outer screen;
the outer screen is configured to display a first interface, wherein the first interface comprises a target control of a target application;
the outer screen is further configured to receive a first operation instruction applied to the target control;
the processing module is configured to determine a display parameter of a layer set corresponding to the first operation instruction based on configuration information of the target application, wherein the layer set comprises a background layer, an application layer, and a decorative layer, and the application layer comprises display content corresponding to the first operation instruction; and
the processing module is further configured to display a second interface on the outer screen based on the display parameter in response to the first operation instruction, wherein the second interface comprises a first display area and a second display area, the camera is located in the first display area and outside the second display area, the application layer is displayed in the second display area, and the decorative layer and the background layer are displayed in the first display area.

15. An electronic device, comprising a processor and a memory, wherein the memory is configured to store a computer program, the computer program comprises program instructions, and the processor is configured to invoke the program instructions, so that the method according to any one of claims 1-13 is performed.

16. A computer-readable storage medium, wherein the computer-readable storage medium stores a computer program, the computer program comprises program instructions, and when the program instructions are executed by a processor, the method according to any one of claims 1-13 is performed.
